# EUROPEAN PATENT APPLICATION

(11) **EP 2 116 940 A2**
(43) Date of publication of application: **11.11.2009**
(21) Application number: 09159072.9
(22) Date of filing: 29.04.2009
(51) Int. Cl.: G06F 17/21

(54) **Document processing apparatus and document processing method**

(30) Priority: 02.05.2008 JP 2008120771
(71) Applicant: Canon Kabushiki Kaisha, Tokyo 146-8501 (JP)
(72) Inventor: Miyamoto, Daijiro, Tokyo Tokyo 146-8501 (JP)
(74) Representative: TBK-Patent

(57) **Abstract**

Examples of settings that can be set and are referenced in a case of automatically generating a table of contents page include a table of contents document size, document direction, ineffectiveness of settings for the overall document, selection of initial symbols, page numbers to be employed, presence/absence of lead lines, and selection of chapters to be displayed in the table of contents. Such setting values are referenced in a case of creating a table of contents page, and the table of contents page is generated in according with the setting values.

## Description

### BACKGROUND OF THE INVENTION

### Field of the Invention

The present invention relates to a document processing apparatus and a document processing method, and in particular to a document processing apparatus and document processing method in a system that includes an information processing apparatus such as a personal computer and a printing apparatus such as a printer.

### Description of the Related Art

Conventionally, applications for creating a document have included a function for creating a table of contents by extracting text in lines that are headings and lines whose text features (e.g., text size and text decoration) are different from other portions of the document, and arranging such text in lines (e.g., see Japanese Patent Laid-Open No. 2005-209087). In the function for creating a table of contents, the size of the table of contents page to be created has been the same size as the other document pages. For example, if the document pages have been created in the A4 size, the table of contents page is also created in the A4 size. Note that the content of a document will be referred to as the body.

There is also a print method called N-up printing in which a plurality (N) of document pages are printed on one side of a sheet. In this case, the size of the document pages is reduced according to the number of pages that are to be arranged on one side of the sheet. For example, in a case of printing two document pages on an A4 sheet (2-up), the size of the document pages is reduced to A5, which is half the size of A4. In this case, the table of contents page that is created has also been reduced similarly to the other document pages.

However, unlike the pages of the body, there is not necessarily a need to print the table of contents page in the same size and layout as the pages of the body. The table of contents page is a page that displays headings of the body and the page numbers on which they appear in association with each other, thereby showing a list of the content of the body and the location of each part of the content. For this reason, there are cases in which it is desirable for the list to be easily viewable to the reader, or rather for the table of contents page to be printed in a size and layout that is different from the pages including the content of the body.

However, in the above-described conventional technology, the size and layout of the table of contents page is the same as the document pages of the body, and there is no other option.

### SUMMARY OF THE INVENTION

The present invention has been achieved in light of the above-described conventional example, and provides a document processing apparatus and document processing method that enable creating a table of contents page in a size and layout that are different from the body.

The present invention in its first aspect provides a document processing apparatus as specified in claims 1 to 10.

The above aspect of the present invention enables creating a table of contents page in a size and layout that are different from the body.

Further features of the present invention will become apparent from the following description of an exemplary embodiment with reference to the attached drawings.

### BRIEF DESCRIPTION OF THE DRAWINGS

FIG. 1 is a block diagram showing an exemplary software structure of a standalone document processing system in an embodiment.

FIG. 2 is a block diagram showing an exemplary hardware structure that realizes the document processing system of the embodiment.

FIG. 3 is a diagram showing an exemplary structure of a book file.

FIGs. 4A to 4C are diagrams showing a list of book attributes.

FIG. 5 is a diagram showing a list of chapter attributes.

FIG. 6 is a diagram showing a list of page attributes.

FIG. 7 is a flowchart showing an exemplary procedure for opening a book file.

FIG. 8 is a diagram showing an exemplary user interface screen in a case where a new book file has been opened.

FIG. 9 is a diagram showing an exemplary user interface screen in a case where an existing book file has been opened.

FIG. 10 is a flowchart showing an exemplary procedure for importing an electronic document file into a book file.

FIG. 11 is a flowchart showing an exemplary procedure for converting application data shown in step 801 of FIG. 10 into an electronic document file.

FIG. 12 is a diagram showing an exemplary data structure used in a case of performing printing or displaying.

FIG. 13 is a block diagram showing an exemplary software structure of a server-client document processing system.

FIG. 14 is a diagram showing an exemplary user interface screen for performing settings for inserting a table of contents.

FIG. 15 is a diagram showing an exemplary user interface screen for performing settings regarding book attributes that are not to be reflected in a table of contents.

FIG. 16 is a diagram showing exemplary content of a table of contents page to be created by a table of contents insertion function.

FIG. 17 is a diagram showing a condition of a book before a table of contents has been inserted.

FIG. 18 is a diagram showing a condition of the book shown in FIG. 17 after a table of contents has been inserted, where the document size of the table of contents is the finishing size.

FIG. 19 is a diagram showing a condition of the book shown in FIG. 17 after a table of contents has been inserted, where the document size of the table of contents is the same size as a selected document page.

FIG. 20 is a flowchart showing exemplary processing performed in table of contents insertion.

FIG. 21 is a flowchart showing exemplary processing for creating the document content of a table of contents page.

FIG. 22 is a diagram showing an exemplary arrangement of the document content of a table of contents page.

FIG. 23 is a flowchart showing exemplary processing for updating a table of contents page.

FIG. 24 is a diagram showing an exemplary user interface screen for table of contents automatic update settings.

FIG. 25 is a flowchart showing exemplary processing for performing table of contents automatic updating.

FIG. 26 is a diagram showing a condition of a book into which a plurality of table of contents pages have been inserted by table of contents insertion, where the page direction in the book attributes is portrait, the page direction of document pages is landscape, the table of contents pages have been created in the landscape direction at the document size, and the N-up setting in the book attributes is 2-up.

FIG. 27 is a diagram showing a condition of the book shown in FIG. 26 after a table of contents merge function has been performed.

FIG. 28 is a flowchart showing exemplary processing for the table of contents merge function.

FIG. 29 is a diagram showing an exemplary flowchart of processing for using the chapter attributes and page attributes of a selected document page as the chapter attributes and page attributes of a table of contents chapter.

FIG. 30 is a diagram showing table of contents setting information.

### DESCRIPTION OF THE EMBODIMENTS

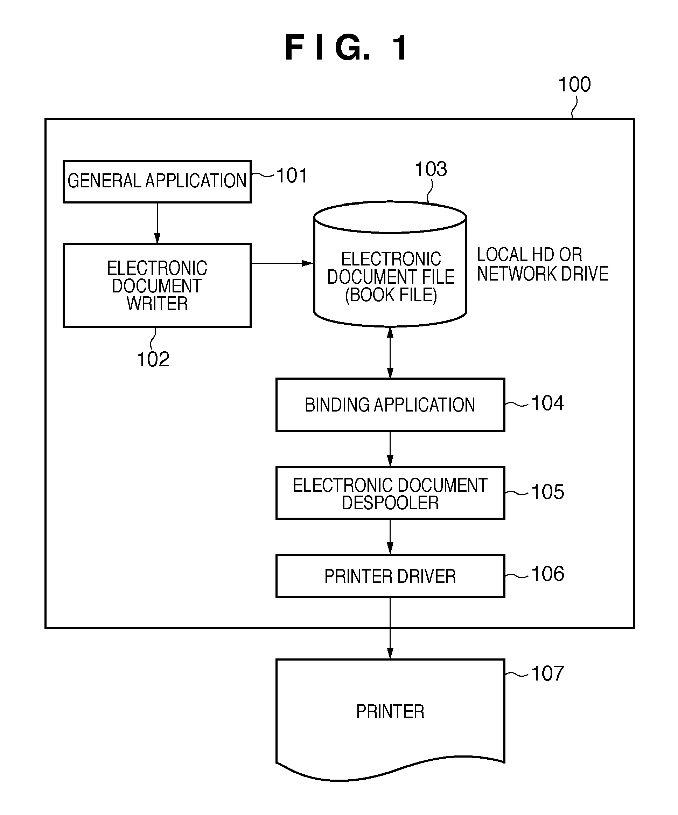

The following describes an overview of a document processing system that is Embodiment 1 of the present invention with reference to FIGS. 1 to 13. In this document processing system, a data file created by a general application is converted into an electronic document file by an electronic document writer. A binding application provides a function for editing the electronic document file. Note that in the present embodiment, a general application, an electronic document writer, a binding application, and an electronic document despooler are described separately so that their respective functions are clear. However, the package in which the present invention is provided to a user is not limited to these, and provision as an application or graphic engine that combines these is also possible. The following describes details of the document processing system.

### <Exemplary software structure of document processing system of present embodiment>

FIG. 1 is a diagram showing a software structure of the document processing system of the present embodiment. The document processing system is realized by a digital computer 100 (hereinafter, also called a "host computer") that is a preferred embodiment of a document processing apparatus (information processing apparatus) of the present invention. The document processing system can be realized by one computer, and in this case, can be called a document processing apparatus. A general application 101 is an application program that provides functions for word processing, spreadsheets, photo retouching, drawing or painting, presentations, text editing, and the like, and has a function for printing with respect to an OS (Operating System). In a case of printing application data such as document data or image data that has been created, such an application uses a predetermined interface (generally called a GDI) that is provided by the OS. In other words, in order to print created data, the application 101 transmits, to an output module of the OS that provides the interface, an output command (called a GDI function) in a predetermined format that depends on the OS. Upon receiving the output command, the output module converts the command into a format that can be processed by an output device such as a printer, and outputs the converted command (called a DDI function). The format that can be processed by the output device differs depending on the device's type, manufacturer, model, and the like. For this reason, a device driver is provided for each device, and a print job is generated by converting a command in the OS with use of one of the device drivers, generating print data, and binding the print data in a JL (Job Language). If Windows (TM) provided by Microsoft Corporation is used as the OS, the above-described output module corresponds to a module called a GDI (Graphic Device Interface).

An electronic document writer 102 is an improvement on the above-described device driver, and is a software module provided for realizing the present document processing system. However, the electronic document writer 102 is not aimed at a specified output device, but rather converts an output command into a format that can be processed by a binding application 104 and a printer driver 106 that are described later. There are no particular limitations on the format into which the electronic document writer 102 performs conversion (hereinafter, called the "electronic document format"), as long as the format enables expressing a document in units of pages in a detailed format. Examples of substantive standard formats that can be employed as the electronic document format include the PDF format provided by Adobe Systems and the SVG format.

In a case of the application 101 causing the electronic document writer 102 to be used, the electronic document writer 102 is designated as the device driver to be used for output, and thereafter printing is executed. However, the format of an electronic document file as created by the electronic document writer 102 is not complete in terms of an electronic document file. For this reason, it is the binding application 104 that designates the electronic document writer 102 as the device driver, and application data is converted into an electronic document file under control of the binding application 104. The binding application 104 causes a new incomplete electronic document file generated by the electronic document writer 102 to be complete as an electronic document file having a later-described format. When it is necessary for these files to be clearly identified in the following, a file created by the electronic document writer 102 is called an electronic document file, and an electronic document file that has been given structure by the binding application is called a book file. Also, when there is no particular need to distinguish between these files, a document file, an electronic document file and a book file generated by an application are all called a document file (or document data).

By designating the electronic document writer 102 as the device driver in this way, and by the general application 101 causing such data to be printed, the application data is converted into an electronic document format in units of pages defined by the application 101. The converted application data is stored as an electronic document file 103 on a storage medium such as a hard disk. Note that data defined by the application 101 is hereinafter called a "logical page" or a "document page". In other words, an electronic document file, that is to say document data, of the present embodiment is constituted from document pages. Also, the hard disk may be a local drive included in the computer that realizes the document processing system of the present embodiment, or in the case of being connected to a network, the hard disk may be a drive provided on the network.

The binding application 104 reads an electronic document file or the book file 103 and provides the user with a function for editing the read electronic document file or book file 103. In a case of printing the book file 103 that has been edited by the binding application 104, an electronic document despooler 105 is started up by the binding application 104. The electronic document despooler 105 is a program module installed in the computer along with the binding application. The electronic document despooler 105 is a module used for outputting rendering data to a printer driver in a case of printing a document (book file) used by the binding application. The electronic document despooler 105 reads a designated book file from the hard disk, and in order to print pages in the format described in the book file, the electronic document despooler 105 generates an output command suitable for the above-described output module of the OS, and outputs the output command to an output module that is not shown in FIG. 1. In this case, the printer driver 106 of a printer 107 that is to be used as the output device is designated as the device driver. The output module converts the output command, which was received with use of the designated printer driver 106 of the printer 107, into a device command that can be interpreted and executed by the printer 107. The device command is then transmitted to the printer 107, and the printer 107 prints an image in accordance with the command.

### <Exemplary hardware structure of document processing system of present embodiment>

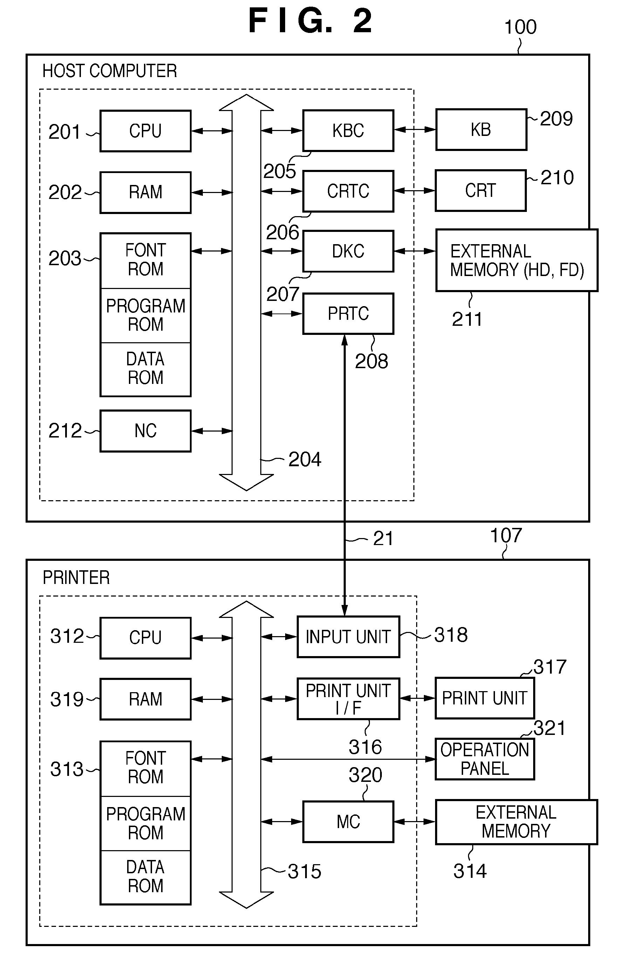

FIG. 2 is a diagram showing a hardware structure of the document processing system of the present embodiment. In FIG. 2, the host computer 100 includes a CPU 201 that executes document processing on a document that includes a mixture of graphics, images, text, charts (including spreadsheets, etc.) and the like, based on, for example, a document processing program stored in a program ROM in a ROM 203 or in an external memory 211. The CPU 201 of the host computer 100 performs overall control of devices connected to a system bus 204. The program ROM in the ROM 203 or the external memory 211 also stores, for example, an operating system program that is a control program of the CPU 201. A font ROM in the ROM 203 or the external memory 211 stores, for example, font data used in a case of performing the above-described document processing, and a data ROM in the ROM 203 or the external memory 211 stores various types of data used in a case of performing the above-described document processing and the like. A RAM 202 functions as, for example, a main memory and a work area of the CPU 201.

A keyboard controller (KBC) 205 controls key input from a keyboard 209 and a pointing device that is not shown in FIG. 2. A CRT controller (CRTC) 206 controls display performed by a CRT display (CRT) 210. A disk controller (DKC) 207 controls access to/from the external memory 211 that is, for example, a hard disk (HD) or flexible disk (FD) storing files. Examples of the stored files include a boot program, various types of applications, font data, a user file, an edited file, and a printer control command generation program (hereinafter, called a "printer driver"). A printer controller (PRTC) 208 is connected to the printer 107 via a bidirectional interface (interface) 21, and executes processing for controlling communication with the printer 107. An NC 212 is connected to a network and executes processing for controlling communication with other devices connected to the network.

Note that CPU 201 executes processing for expanding (rasterizing) an outline font to, for example, a display information RAM set in the RAM 202, and enables WYSIWYG on the CRT 210. The CPU 201 also opens various windows registered based on commands designated by, for example, a mouse cursor (not shown in FIG. 2) on the CRT 210, and executes various types of data processing. In a case of executing printing, the user can open a window regarding print settings and set a print processing method for the printer driver, including setting a printer and selecting a print mode.

The printer 107 is controlled by a CPU 312. The CPU 312 outputs an image signal as output information to a print unit (printer engine) 317, which is connected to a system bus 315, based on a control program stored in a program ROM in a ROM 313 or a control program stored in an external memory 314. The program ROM in the ROM 313 also stores, for example, a control program of the CPU 312. A font ROM in the ROM 313 stores, for example, font data used in a case of generating the output information. A data ROM in the ROM 313 stores, for example, information used in the host computer in a case of a printer that does not include the external memory 314 that is a hard disk or the like.

The CPU 312 can perform processing for communicating with the host computer via an input unit 318, and can notify the host computer 100 of, for example, information in the printer. A RAM 319 is a RAM that functions as, for example, a main memory and a work area of the CPU 312, and is structured so that the memory capacity can be expanded by an optional RAM that is connected to an expansion port not shown in FIG. 2. Note that the RAM 319 is used as, for example, an output information expansion area, an environment data storage area and an NVRAM. A memory controller (MC) 20 controls access to/from the above-described external memory 314 that is a hard disk (HD), IC card, or the like. The external memory 314 is optionally connected and stores, for example, font data, an emulation program, and form data. Also, 321 is a control panel on which switches for operations, LED indicators, and the like are arranged.

A plurality of the above-described external memories 314 may be provided rather than being limited to one, and a structure is also possible in which in addition to internal fonts, a plurality of external memories storing programs for interpreting different printer control languages and option cards can be connected. Furthermore, an NVRAM that is not shown may be provided, and printer mode setting information received from the control panel 321 may be stored.

### <Exemplary format of electronic document data>

Before giving details of the editing application 104, the following describes the data format of a book file. A book file has a three-layer structure that resembles a paper-medium book. The upper layer is called a "book", resembles one book, and defines attributes (also called "settings") pertaining to the overall book. The intermediate layer therebelow corresponds to a chapter in a book, and is called a "chapter". Attributes can be defined for each chapter. The lower layer is called a "page" and corresponds to pages defined by an application program. Attributes can also be defined for each page. One book may include a plurality of chapters, and one chapter can include a plurality of pages.

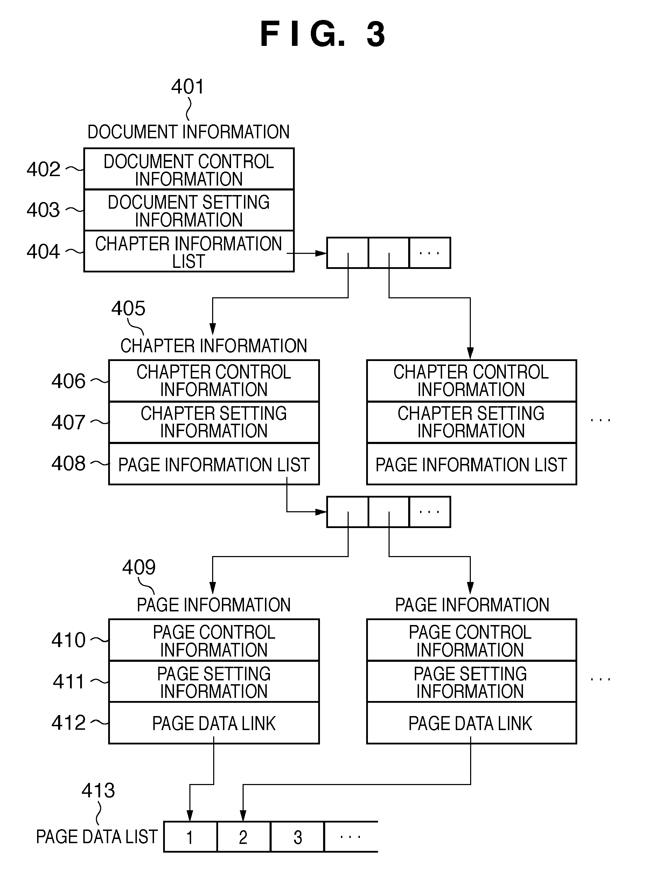

FIG. 3 diagrammatically shows an exemplary format of a book file. In this exemplary book file, a book, chapters and pages are indicated by respectively corresponding nodes. One book file includes one book. Since the book and chapters are concepts for defining book structures, these layers include, as substance, defined attribute values (also called setting values) and links to lower layers. Pages have, as substance, data for each page output by an application program. For this reason, pages include the attribute values thereof as well as document page substance (document page data) and links to the document page data. Note that when performing output to a paper medium or the like, there are cases in which a print page includes a plurality of document pages. This structure is not displayed by links, but rather is displayed as attributes in the book, chapter and page layers.

Since it is not necessary for a book file to be one completed book, a "book" is generalized as a "document" in FIG. 3. First, document information 401 is at the top. The document information 401 can be roughly divided into three parts, namely 402 to 404. Document control information 402 holds information such as a path name in the file system of a document file. Document setting information 403 holds layout information such as a page layout and function setting information of a printing apparatus such as stapling and book binding, and the document setting information 403 corresponds to book attributes. A chapter information list 404 holds, in a list format, a cluster of chapters that constitute a document. Chapter information 405 is held in the list.

The chapter information 405 can also be roughly divided into three parts, namely 406 to 408. Chapter control information 406 holds information such as the names of chapters. Chapter setting information 407 holds information regarding stapling and a page layout that are unique to the chapter, and the chapter setting information 407 corresponds to chapter attributes. The inclusion of setting information for each chapter enables creating a document that has a complicated layout, such as the first chapter being in a 2-up layout and the other chapters being in a 4-up layout. A page information list 408 holds, in a list format, a cluster of document pages that constitute the chapter. Page information data 409 is held in the page information list 408.

The page information data 409 is also roughly divided into three parts, namely 410 to 412. Page control information 410 holds information such as page numbers displayed in a tree. Page setting information 411 holds information such as a page rotation angle and page arrangement position information, and the page setting information 411 corresponds to document page attributes. Page link information 412 is document data corresponding to pages. In this example, the page information data 409 does not directly hold document data, but instead holds only the page link information 412, and the actual document data is held in a page data list 413.

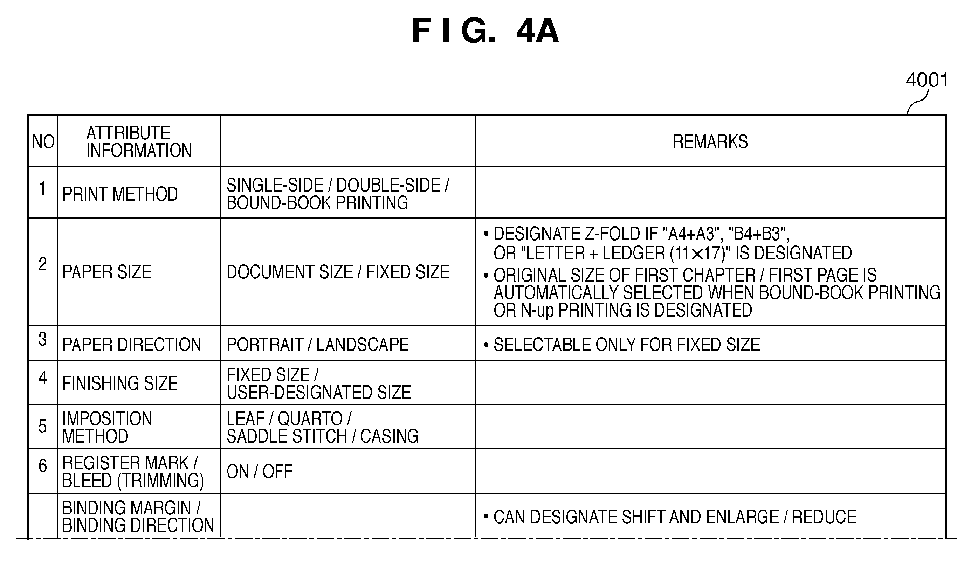

FIGs. 4A to 4C are lists showing an example of book attributes (Here, "book attributes" refers to the document setting information 403, and is also called book settings or book setting information.). Normally, when an item can be defined repetitively in a lower layer, the attribute value in the lower layer is used with priority. Therefore, the values defined in items that are only included in the book attributes are effective throughout the entire book. However, for an item that is repeated in a lower layer, the value of such an item is used as a default value if a value is not defined in the lower layer. However, as described later, it is possible in the present embodiment to select whether to give priority to attribute values in lower layers. Note that each item shown in FIGs. 4A to 4C does not specifically correspond to one item, but rather there are cases in which an item includes a plurality of related items.

As will be described in the creation of the table of contents page, there is a setting that designates ignoring the book attributes for only the table of contents page.

Items that are unique to the book attributes are print method, finishing size, imposition method, register mark/bleed, book binding details, front/back cover sheet, index sheet, slip sheet, chapter break, and table of contents setting. The above are items defined throughout the book. The value of the print method attribute can be designated as single-side printing or double-side printing. The imposition method attribute is an item for designating an imposition method when there is a desire to impose and print a plurality of print pages on one output sheet, based on the assumption of trimming and binding output sheets with use of an inline finisher or offline finisher. Examples of imposition methods that can be designated are "leaf", "saddle stitch", "casing", and "quarto". "Saddle stitch" is a method of imposing and printing sheets in a format that enables obtaining a bound book by bundling together a separately designated number of sheets, folding the bundle in two, and binding the bundle. "Casing" is a method of imposing and printing a casing cover sheet and inner sheets in a format that enables obtaining a case-bound book with use of an inline finisher or an offline finisher. "Quarto" is a method of imposing and printing print pages in a format that enables obtaining a perfect-bound book by folding output sheets into four and bundling them.

The register mark/bleed attribute is an item that is designed when there is a desire to designate the printing of register marks on a print page and designate a bleed in a case of printing an electronic document file. An N-up print designation attribute is an item for designating the number of document pages that are to be included on one print page. Arrangements that can be designated include 1×1, 1×2, 2×2, 3×3, and 4×4. There are cases in which N-up is simply called "print layout". A function for arranging document pages on a side of a print sheet, including single-side, double-side, N-up, binding settings, etc. is sometimes called an imposition function. When N-up has been set, N document pages are arranged on one side of a sheet. In 2-up, two document pages are arranged on one side of a sheet.

If an imposition method such as "saddle stitch", "casing", or "quarto" is designated, the spread direction, number of sheets in a bundle, number of pages to be bundled, binding width, gutter shift, etc. can be designated as the binding details attribute. The finishing attribute is an item for designating whether to perform processing such as saddle stitch binding, in-casing binding (binding) or three-side trimming on ejected sheets, and the effectiveness of the finishing attribute is dependent on whether such functions are included in the printing apparatus to be used.

The front/back cover sheet attribute includes a designation for appending sheets to be the front and back cover sheet when printing an electronic document file that is to be compiled into a book, and a designation for content to be printed on the appended sheets. The index sheet attribute includes a designation for inserting, as a chapter break, a tabbed index sheet that is separately provided to the printing apparatus, and a designation for content to be printed on the index (tab) portion. The index sheet attribute is effective if the printing apparatus to be used includes an inserter having an insert function for inserting a sheet that is separately provided from the printing sheets to a predetermined position, or if a plurality of paper feed cassettes can be used. The same follows for the slip sheet attribute.

The slip sheet attribute includes a designation for inserting, as a chapter break, a sheet supplied from an inserter or a paper feed cassette, and in a case of inserting a slip sheet, a designation for a paper feed source etc.

The chapter break attribute includes designations for, for example, using a new sheet, using a new print page, or doing nothing in particular at a break between chapters. In the case of single-side printing, using a new sheet and using a new print page mean the same thing. In the case of double-side printing, a successive chapter is not printed on the same sheet as the previous chapter if "use a new sheet" is designated, but it is possible for a successive chapter to be printed on the front/back of the same sheet as the previous chapter if "use a new print page" is designated.

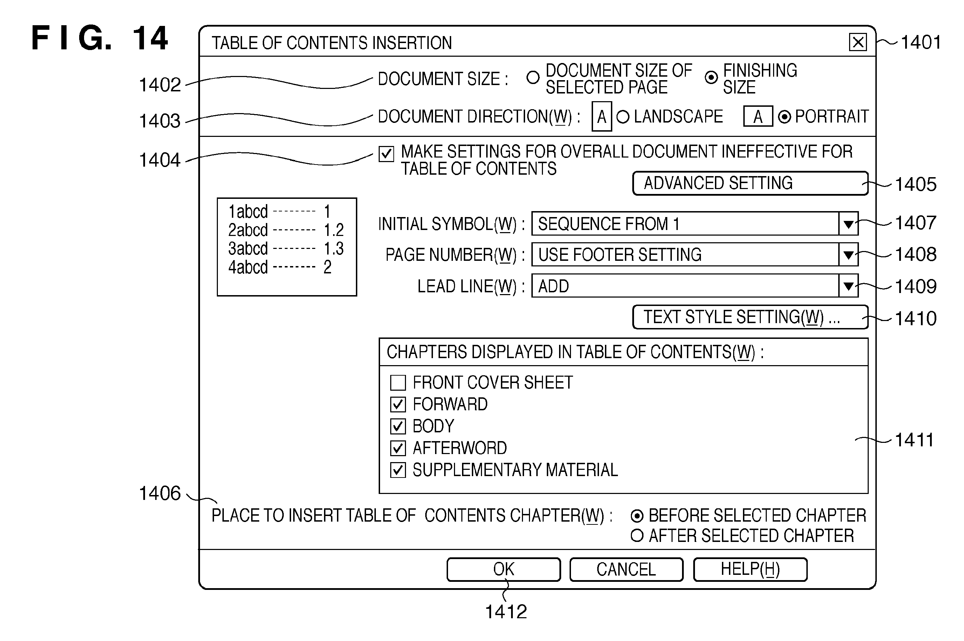

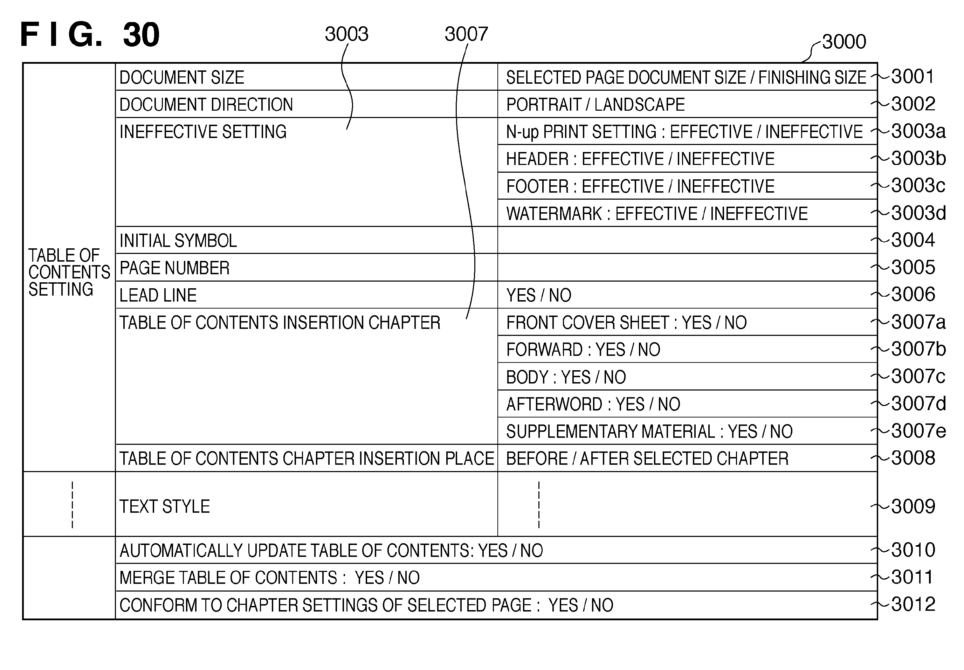

A table of contents setting 4001 includes a setting value and a designation for automatic updating in a case of automatically updating a table of contents. Details of the setting items included in the table of contents setting 4001 are shown in FIG. 30. Setting information shown in FIG. 30 that is necessary for generating a table of contents page is set via a UI shown in FIG. 14 etc. and stored. Further details of the setting and storing of the setting information are given later in the description of FIG. 14. Note that the table of contents setting 4001 may be stored as attributes that are separate from the book attributes.

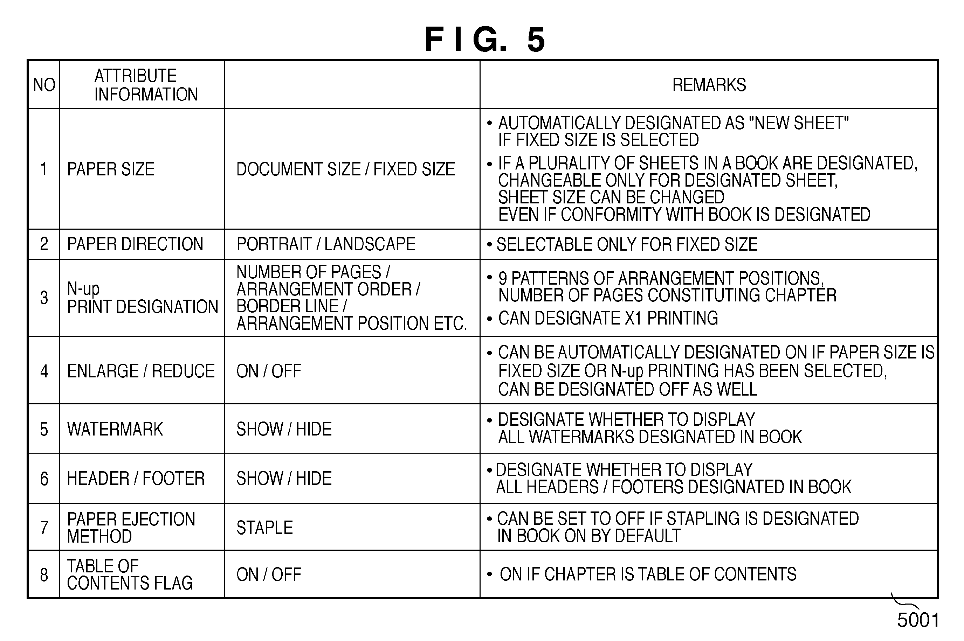

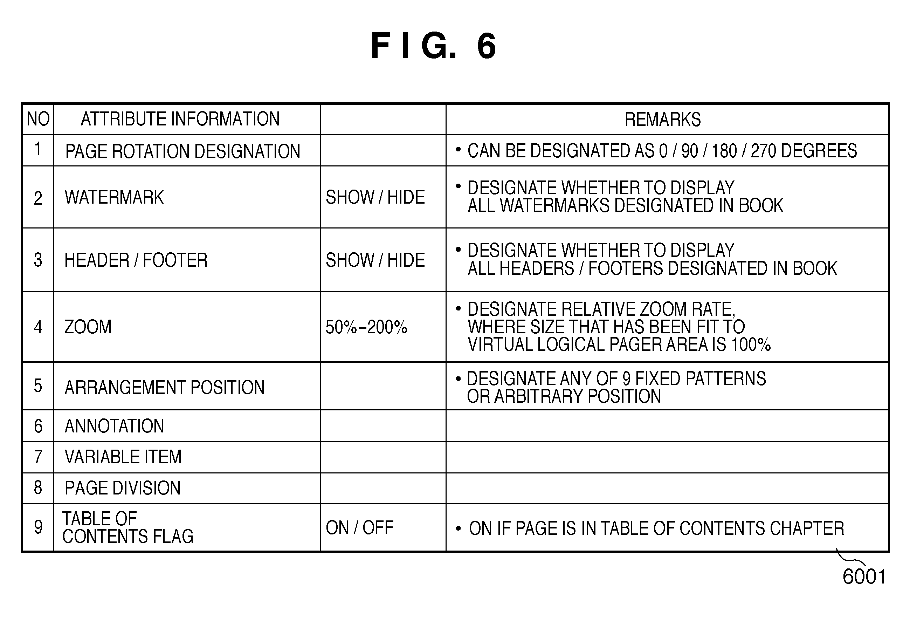

FIG. 5 is a list showing an example of chapter attributes (chapter setting information 407), and FIG. 6 is a list showing an example of page attributes (page setting information 411). The relationship between chapter attributes and page attributes is the same as the relationship between book attributes and lower-level attributes. Most of the chapter attributes are repetitions of book attributes. Therefore, if a definition in the chapter attributes is different from a definition in the book attributes, the value defined in the chapter attributes is normally given priority. However, as described later, it is possible in the present embodiment to select whether to give priority to the lower-level attribute value.

There are five items that are common to only the book attributes and chapter attributes, namely paper size, paper direction, N-up print designation, enlarge/reduce, and paper ejection method. Among these, the N-up print designation attribute is an item for designating the number of document pages that are to be included on one print page. Arrangements that can be designated include 1×1, 1×2, 2×2, 3×3, and 4×4. The paper ejection method attribute is an item for designating whether to perform stapling processing on ejected sheets, and the effectiveness of the paper ejection method attribute is dependent on whether the printing apparatus to be used has a stapling function.

A table of contents chapter attribute 5001 is set to ON by the binding application 104 for a table of contents chapter that has been created when there has been an instruction to automatically generate a table of contents. The table of contents chapter attribute 5001 is set to OFF for the body. This enables the binding application 104 to distinguish between the table of contents chapter and a chapter in the body by referring to the table of contents chapter attribute 5001.

Items that are unique to the page attributes are a page rotation attribute, zoom, arrangement designation, annotation, page division, and the like. The page rotation attribute is an item for designating a rotation angle in a case of arranging a document page on a print page. The zoom attribute is an item for designating a zoom rate for a document page. The zoom rate is designated based on a virtual logical page area size of 100%. The virtual logical page area is an area occupied by one document page in a case of arranging a document page according to the N-up designation and the like. For example, if 1×1 is designated, the virtual logical page area is an area corresponding to one print page, and if 1×2 is designated, the virtual logical page area is an area obtained by reducing the sides of one print page to approximately 70%.

Attributes that are common to the book, chapter and page attributes are a watermark attribute and a header/footer attribute. A watermark is a separately designated image, character string or the like that is overlaid on data created by an application and printed. A header and footer are watermarks that are printed in the top and bottom margin of each page respectively. Items that can be designated by variables, such as page numbers and the date, are provided in the header and footer. Note that although the content that can be designated in the watermark attribute and the header/footer attribute is common to chapters and pages, the same does not follow for the book. The content of watermarks, headers and footers can be set in the book attributes, and it is also possible to designate in the book attributes what watermarks, headers and footers are to be printed throughout the overall book. Meanwhile, it is possible to designate for each chapter and page whether to print the watermark, header and footer set in the book attributes.

A table of contents page attribute 6001 is set to ON by the binding application 104 for the table of contents page that has been created when there has been an instruction to automatically generate a table of contents. The table of contents page attribute 6001 is set to OFF for the body. This enables the binding application 104 to distinguish between the table of contents page and a page in the body by referring to the table of contents page attribute 6001.

### <Exemplary operation procedure of document processing system of present embodiment>

### (Exemplary book file generation procedure)

A book file has a structure and content as described above. The following describes a procedure by which the binding application 104 and electronic document writer 102 create a book file. The creation of a book file is realized as part of a book file editing operation performed by the binding application 104.

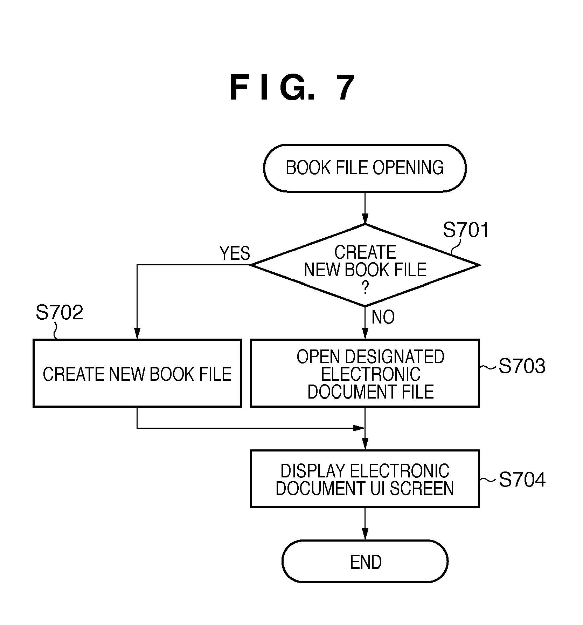

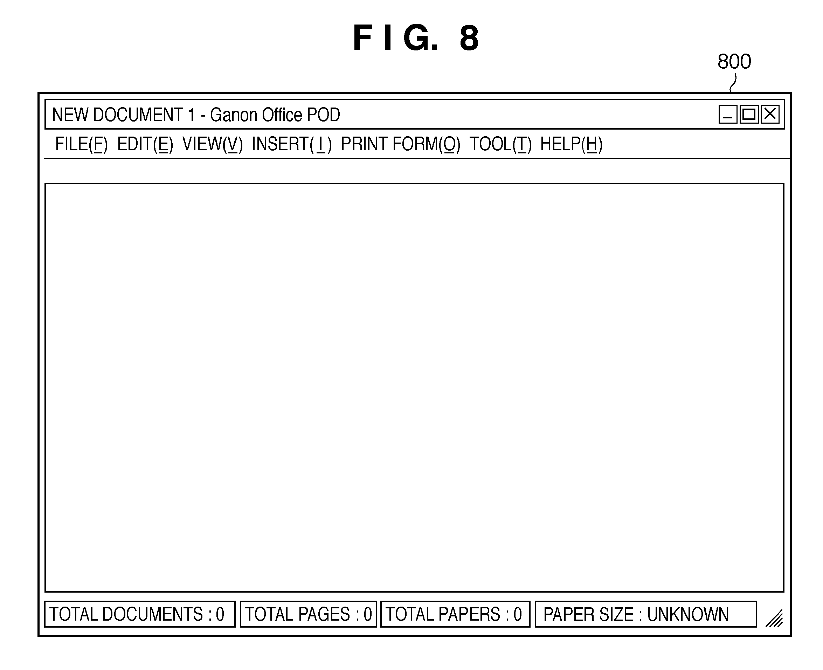

FIG. 7 is a flowchart showing a procedure performed in a case where the binding application 104 opens a book file. Note that the steps in the flowcharts of the present application are executed by the CPU 201 of the host computer (document processing apparatus) shown in FIG. 2. First, a determination is made as to whether the book file to be opened is a book file that is to be newly created or an existing book file (step S701). Upon judging that a new book file is to be created, a book file that does not include chapters is newly created (step S702). As shown in the example in FIG. 3, the newly created book file includes only a book node 401, which is a book node that does not include links to chapter nodes. A set of pre-provided attributes for a case of newly creating a book file are applied as the book attributes. A user interface (UI) screen for editing the new book file is then displayed (step S704). FIG. 8 shows an exemplary UI screen in a case where a new book file has been created. In this case, nothing is displayed on a UI screen 800 since the book file does not have any substantial content.

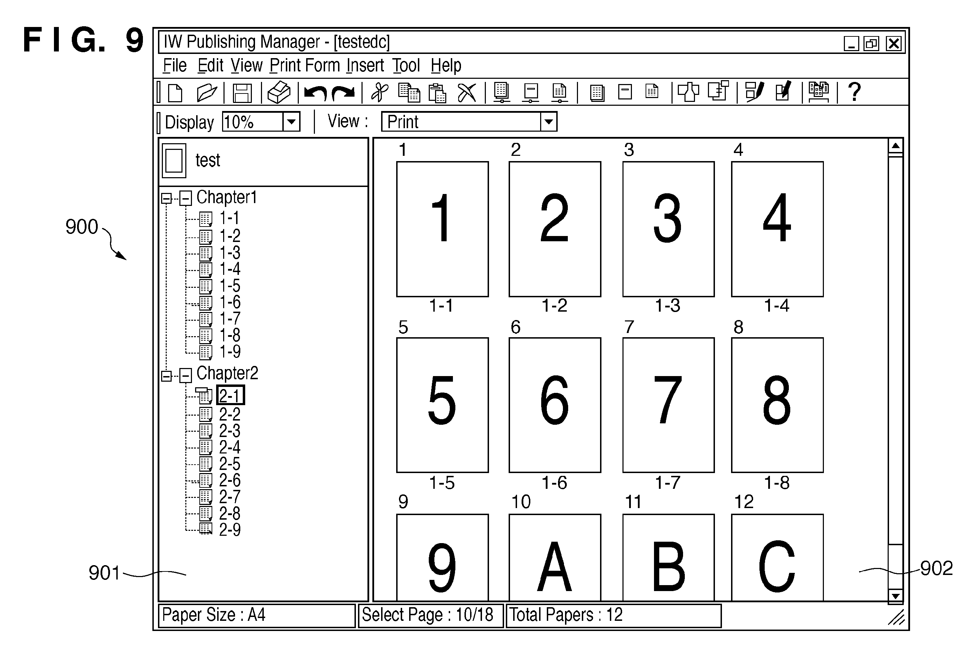

On the other hand, in the case of opening an existing book file, the designated book file is opened (step S703), and a UI screen is displayed in accordance with the structure, attributes and content of the book file. FIG. 9 shows an example the above UI screen. A UI screen 900 includes a tree portion 901 showing a book structure, and a preview portion 902 displaying a printed condition. The tree portion 901 displays chapters included in the book and pages included in the chapters so that the tree structure shown in FIG. 3 can be seen. The pages displayed in the tree portion 901 are document pages. The content of print pages is displayed at a reduced size in the preview portion 902. The display order of the print pages reflects the structure of the book.

Application data that has been converted into an electronic document file by the electronic document writer 102 can be added to the open book file as a new chapter. This function is called an electronic document import function. Importing an electronic document file into the book file newly created by the procedure shown in FIG. 7 gives substance to the book file. The electronic document import function is started up by performing the operation of dragging and dropping application data into the screen shown in FIG. 8 or FIG. 9.

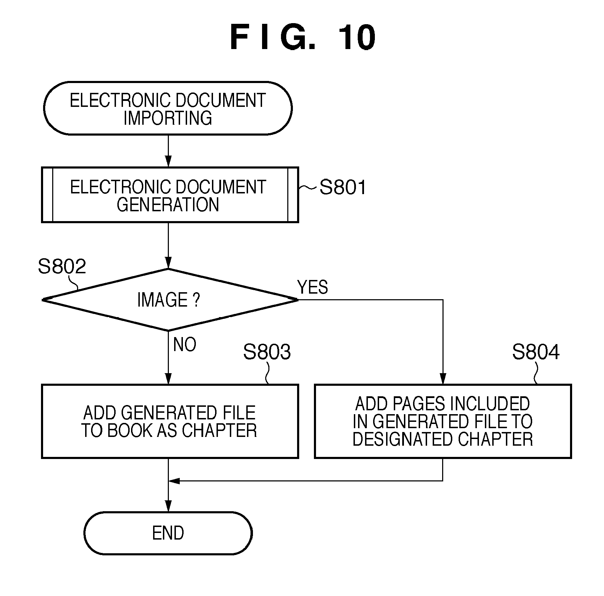

FIG. 10 is a flowchart showing an exemplary electronic document import procedure. First, designated application data is converted into electronic document data by starting up the application program that generated the application data, designating the electronic document writer 102 as the device driver, and outputting the application data for printing (step S801). After the conversion has been completed, whether the converted data is image data is determined (step S802). In the case of the Windows (TM) OS, this determination can be made based on the file extension of the application data. For example, the converted data is determined to be Windows (TM) bitmap data if the extension is "bmp", JPEG-compressed image data if the extension is "jpg", and TIFF format image data if the extension is "tiff". In the case of such image data, the processing of S801 can be omitted since it is possible to directly generate an electronic document file from the image data without starting up the application as in S801.

If the converted data is not image data, the electronic document file generated in step S801 is added to the book of the currently open book file as a new chapter (step S803). For chapter attributes that are common to the book attributes, normally the values are copied from the book attributes, and pre-provided prescribed values are set for chapter attributes that are not common to the book attributes, but as described later, it is possible in the present embodiment to select whether to give priority to attribute values in lower layers.

If the converted data is image data, a new chapter is not added as a rule, but rather the document pages included in the electronic document file generated in step S801 are added to a designated chapter (step S804). However, if the book file is a newly created file, a new chapter is created, and the pages of the electronic document file are added as pages that belong to the new chapter. Normally, for page attributes that are common to attributes in a higher layer, the attribute values of the higher layer are used, and for attributes defined in the application data that are carried over to the electronic document file, the values of such attributes are used. For example, if an N-up setting or the like is defined in the application data, the attribute value thereof is carried over to the electronic document file. In this way, a new book file is created or a new chapter is added. However, as described later, it is possible in the present embodiment to select whether to give priority to attribute values in lower layers.

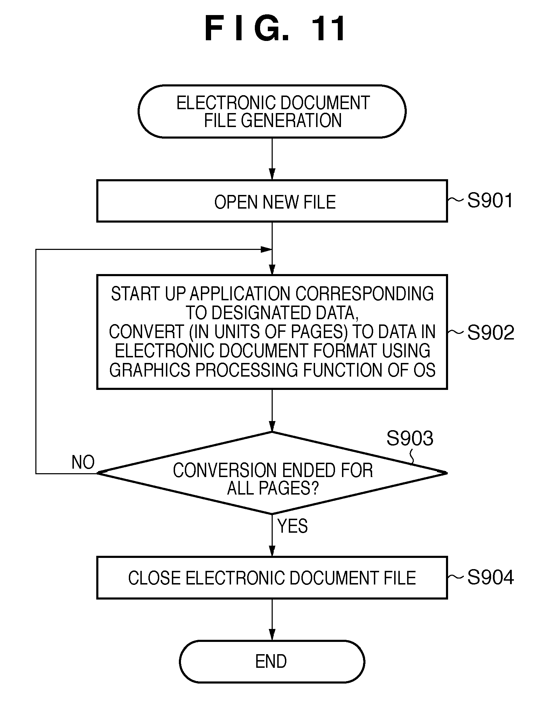

FIG. 11 is a flowchart showing a procedure in which the electronic document writer 102 generates an electronic document file in step S801 shown in FIG. 10. First, a new electronic document file is created and opened (step S901). An application corresponding to designated application data is started up, the electronic document writer 102 is set as the device driver, and an output command is transmitted to the output module of the OS. The output module converts the received output command into data in an electronic document format with use of an electronic document writer, and outputs the data (step S902). The output destination is the electronic document file opened in step S901. A determination is made as to whether conversion of all of the designated data has ended (step S903), and if conversion of all of the designated data has ended, the electronic document file is closed (step S904). The electronic document file generated by the electronic document writer 102 is the file shown in FIG. 3, which includes the substance of the document page data.

### (Example of book file editing)

A book file can be created from application data through the procedure described above. Editing operations such as the following can be performed on chapters and pages in the generated book file.
(1) New addition
(2) Delete
(3) Copy
(4) Cut
(5) Paste
(6) Move
(7) Change chapter name
(8) Reassign page number/name
(9) Insert front cover sheet
(10) Insert slip sheet
(11) Insert index sheet
(12) Page layout of document pages

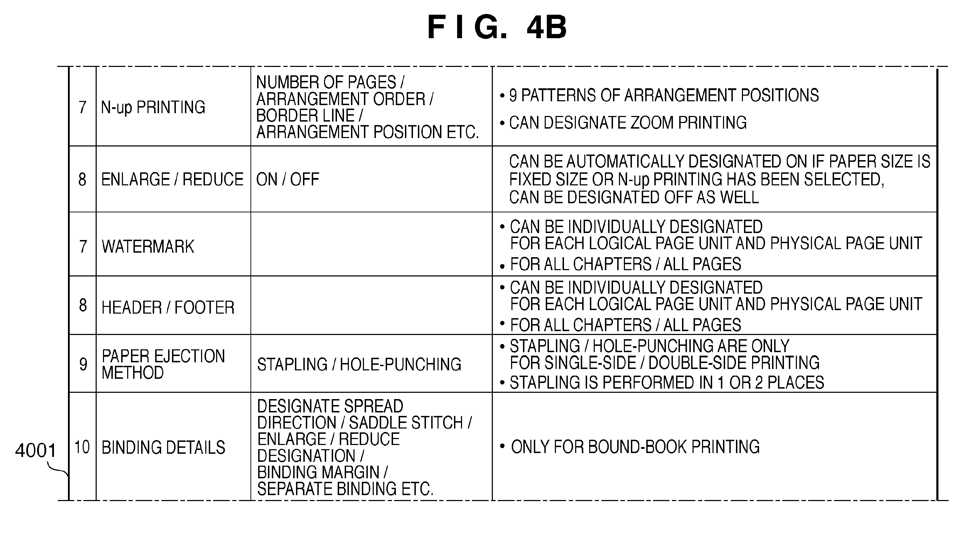

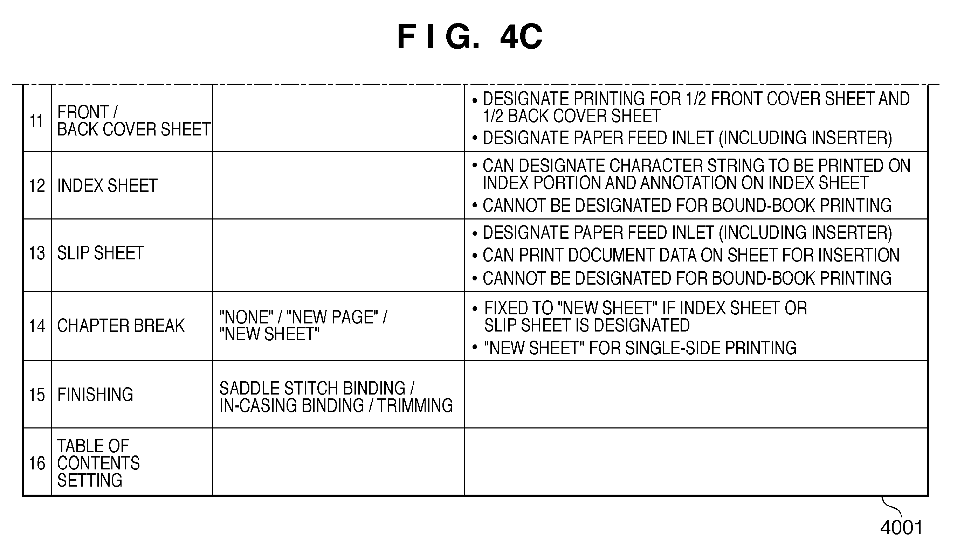

Additionally, it is possible to perform an operation for undoing a previously performed editing operation, and furthermore perform an operation for redoing an operation that was undone. These editing functions enable performing editing operations such as merging a plurality of book files, rearranging chapters and pages in a book file, deleting chapters and pages in a book file, changing the layout of document pages, and inserting a slip sheet or index sheet. When such operations are performed, the results of the operations are reflected in the attributes shown in FIGS. 4 to 6, or are reflected in the structure of the book file. For example, if an operation for newly adding a blank page is performed, a blank page is inserted at a designated place. The blank page is treated as a document page. If the layout of a document page is changed, the content of the change is reflected in attributes such as the print method, N-up printing, front/back cover sheet, index sheet, slip sheet, and chapter break. The following describes details of exemplary displays and operations in a case of editing in the present embodiment.

### (Example of outputting a book file)

The ultimate aim of a book file created and edited as described above is output for printing. When the user selects a file from the binding application UI screen 900 shown in FIG. 9 and further selects printing from the UI screen 900, the selected file is output for printing by a designated output device. In this case, first the binding application 104 creates a job ticket based on the currently open book file, and passes the job ticket to the electronic document despooler 105. The electronic document despooler 105 converts the job ticket into an output command for the OS, such as a GDI command for Windows (TM), and transmits the output command to an output module such as a GDI. The output module generates a command suited for a device with use of the designated printer driver 106, and transmits the command to the device.

In other words, a graphic engine of the output module that is not shown in the drawings loads a printer driver 106 provided for each printing apparatus from the external memory 211 into the RAM 202, and sets output to the printer driver 106. The output module then converts the received GDI (Graphic Device Interface) function into a DDI (Device Driver Interface), and outputs the DDI function to the printer driver 106. Based on the DDI function received from the output module, the printer driver 106 performs conversion to a control command that is recognizable to a printer, such as a PDL (Page Description Language). The converted printer control command is such that output to the printer 107 as print data is performed via a system spooler loaded into the RAM 202 by the OS and via the interface 21.

Here, the job ticket is data having a structure in which a document page is the minimum unit. The structure in the job ticket defines the layout of document pages on paper. One job ticket is issued per job. Therefore, first at the top there is a node called "document" that defines the attributes of the overall document, such as double-side/single-side printing. Below that are paper nodes that include attributes such as an identifier of paper to be used and a designation of a paper feed inlet in a printer. Under each paper node is a node for a sheet to be printed on the paper. One sheet corresponds to one piece of paper. Under each sheet is a print page (physical page). In the case of single-side printing, one physical page belongs to one sheet, and in the case of double-side printing, two physical pages belong to one sheet. Under each physical page is a document page to be arranged on the physical page. The layout of the document page is also included as a physical page attribute.

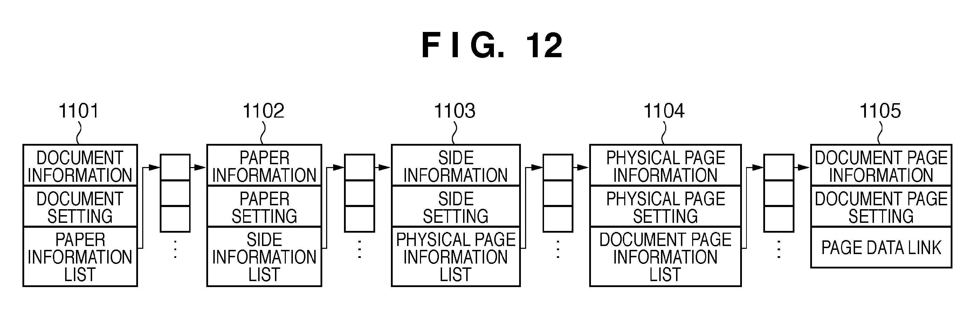

FIG. 12 shows an exemplary data structure of a job ticket. In data for printing, a document is constituted from a cluster of papers, each paper is constituted from a front side and a back side, each side has an area (physical page) in which a document is laid out, and each physical page is constituted from a cluster of document pages, a document page being the minimum unit. 1101 denotes data corresponding to a document, and is constituted from data relating to the overall document and a list of information regarding the papers that constitute the document. Paper information 1102 is constituted from information regarding paper such as a paper size, and a list of side information to be arranged on a paper. Side information 1103 is constituted from data unique to a side and a list of physical pages to be arranged on the side. Physical page information 1104 is constituted from information such as a physical page size and a header/footer, and a list of document pages that constitute the physical page. The electronic document despooler 105 converts the above-described job ticket into an output command to be transmitted to the output module.

### (Exemplary content of preview display)

As previously described, when a book file is opened by the binding application, the UI screen 900 shown in FIG. 9 is displayed. The tree portion 901 displays a tree indicating the structure of the opened book (hereinafter, called the "book of interest"). Three display modes are provided in the preview portion in accordance with a user designation. First mode is a mode called "document view" in which document pages are displayed as is. In the document view mode, the content of document pages belonging to the book of interest is displayed at a reduced size. The layout of the document is not reflected in the display of the preview portion. Second mode is a print preview mode. In the print preview mode, document pages are displayed in the preview portion 902 in a manner such that the layout of the document pages is reflected. Third mode is a simple print preview mode. In the simple print preview mode, only the layout of the document pages, not the content of the document pages, is reflected in the display of the preview portion.

### <Exemplary structure of another document processing system>

The above-described document processing system of the present embodiment is a standalone system; a server-client system that is an extension of the standalone system creates and edits a book file using a structure and procedures that are substantially the same as the in the standalone system. However, the book file and print processing are managed by a server.

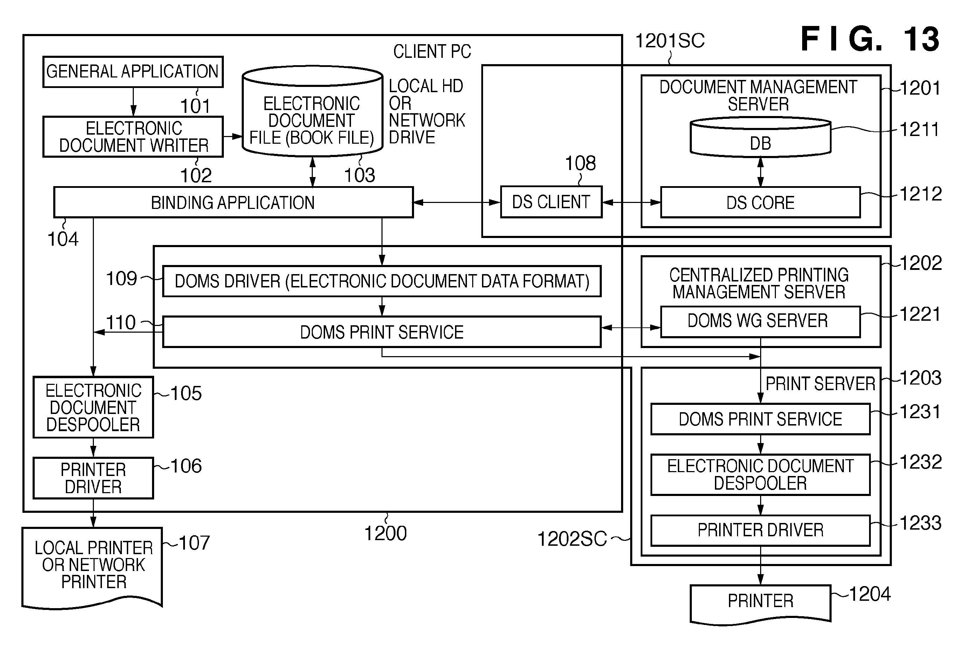

FIG. 13 is a block diagram showing the structure of a server-client document processing system. A client document processing system has the same structure as a standalone system, with the addition of a DOMS driver 109 that is a client module, a DOMS print service module 110, and a DS (Document Service) client module 108. DOMS is an abbreviation for Document Output Management Service. A client document processing system 1200 is connected to a document management server 1201, a centralized printing management server 1202 and a print server 1203.
Although these servers are connected to the client document processing system by a normal network, if any of these servers also function as a client at the same time, the server is connected by inter-process communication that simulates communication between networks. Note that although both the document management server 1201 and centralized printing management server 1202 are connected to a client in FIG. 13, it is also possible to have a case in which only one of them exists on the network. If the connected server is the document management server, a document management server-client system 1201SC that includes the client module thereof is added to the standalone document management system. If the connected server is the centralized printing management server 1202, a printing management server-client system 1202SC that includes the client module thereof is added to the standalone document management system.

The document management server 1201 is a server that stores a book file that has been created and edited by the binding application 104. In a case of the document management server 1201 managing the book file, the book file is stored in a database 1211 of the document management server 1201 in place of, or in addition to, the local HD of the client PC. The storing and reading of the book file between the binding application 104 and document management server 1201 is performed via the DS client 108 and a DS core 1212.

The centralized printing management server 1202 is a server that manages the printing of a book file stored in the client document management system 1200 or stored in the document management server 1201. A printing request from the client is transmitted to a DOMS WG server module 1221 of the centralized printing management server 1202 via the DOMS driver 109 and DOMS print service module 110. In a case of printing by a printer of the client, the centralized printing management server 1202 passes electronic document data to the electronic document despooler 105 via the DOMS print service module 110 of the client. In a case of printing by the print server 1203, the electronic document data is transmitted to the DOMS print service module 1231 of the print server 1203. The centralized printing management server 1202 performs a security check regarding, for example, the qualifications of the user who issued a printing request for a stored book file, and saves a print processing log. In this way, the document processing system can be realized as a standalone system or a server-client system.

### <Table of contents creation processing in document processing system of present embodiment>

The following describes processing for creating a table of contents page in the above-described document processing system. In the document processing system of the present embodiment, the table of contents insertion function is executed by, for example, the user selecting the item "Insert table of contents" from the processing menu field in the UI 900 shown in FIG. 9, which is provided by the binding application 104. The table of contents insertion function is a function for creating a table of contents indicating the structure of the overall book file by the chapter structure of the book file. The table of contents page is created by enumerating, in order from the first chapter, table of contents information to be printed in the table of contents, such as chapter names and the page numbers of the chapter names (i.e., the page numbers where the chapters begin) that have been extracted from document data (i.e., book file). The following describes details of the table of contents creation.

### [Table of contents insertion function]

FIG. 14 shows a table of contents insertion screen. When an "Insert table of contents" menu is selected from the binding application, a table of contents insertion screen 1401 is displayed. The appearance of the table of contents to be created can be set in the table of contents insertion screen 1401.

### (Size setting)

In the table of contents insertion screen 1401, the document size of the table of contents page to be created can be set by a table of contents page document size setting field 1402. In other words, the table of contents page can be printed at a designated size. When "Document size of selected page" is selected, the table of contents page is created at the same size as the document size of a page that is in a selected condition in the tree portion 901 and preview portion 902. If no page is selected, the document size of the first page in the document is selected as the size of the table of contents page. If a plurality of document pages are selected, the same size as the document size of the first document page among the selected document pages is selected. On the other hand, if "Finishing size" is selected, the table of contents page is created at the same size as the finishing size in the book attributes. Note that it also possible to have a structure in which other sizes can be selected or designated as the table of contents size.

The size setting input by the user via a UI 1400 is stored as a document size 3001 in table of contents setting information 3000 shown in FIG. 30. The same follows for the other items. In FIG. 30, the right-most fields of items 3001 to 3009 are stored values, and the names of the items are on the left side thereof. Also, items 3010 to 3012 show stored values.

### (Direction setting)

The document direction of the table of contents page can be set by a table of contents page document direction setting field 1403. This field can be set if "Document size of selected page" has been selected in the table of contents page document size setting field 1402. If "Finishing size" is selected in the table of contents page document size setting field 1402, the finishing paper direction in the book attributes is employed as the table of contents page direction, and a direction cannot be selected in the table of contents page document direction setting field 1403. The direction setting of the table of contents page that was input is stored as a document direction 3002 in the table of contents setting information 3000. In the present embodiment, either portrait or landscape can be set as the direction.

### (Setting disabling setting)

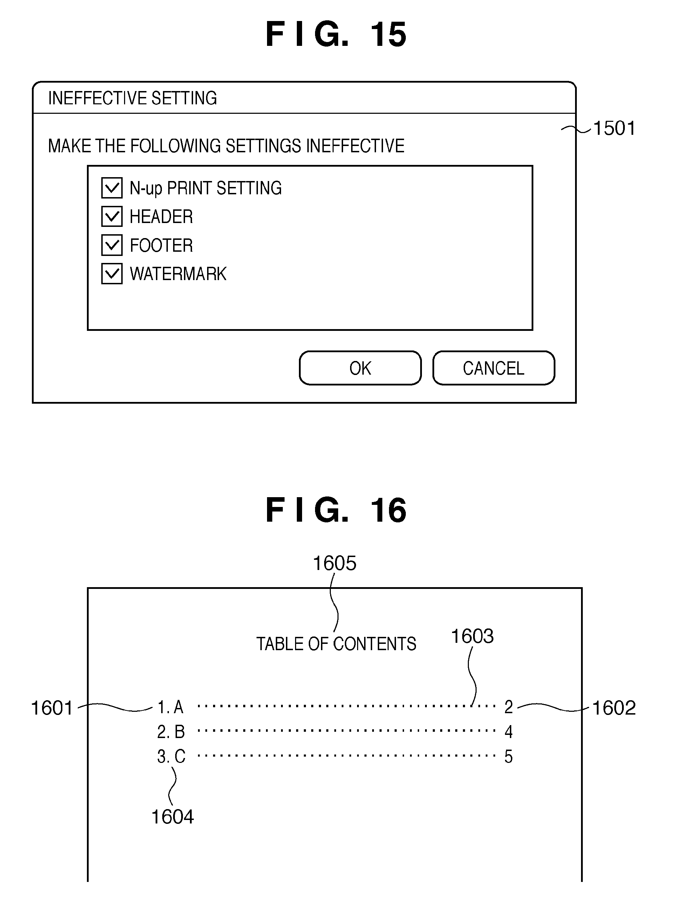

Setting a book setting disabling field 1404 enables preventing a specified book attribute item from being applied to the table of contents page. In other words, a portion of the book attributes can be made ineffective for only the table of contents page. If "Finishing size" is selected in the table of contents page document size setting field 1402, the ineffective setting field 1404 is initially effective (i.e., causing ineffectiveness). If the ineffective setting field 1404 is checked (i.e., causing ineffectiveness), an item in the book attributes that has been selected as an ineffective item is not applied to the table of contents page. In a case of selecting items to be made ineffective (ineffective items), such items are selected from an ineffective setting selection field displayed when an advanced setting button 1405 is pressed. When the button 1405 is selected, an ineffective setting selection field 1501 shown in FIG. 15 is displayed, and it is possible to set ineffectiveness for the items "N-up print designation", "header", "footer", and "watermark" by checking the items. These ineffective settings are stored as ineffective setting information in items 3003a to 3003d respectively in an ineffective setting 3003 in the table of contents setting information 3000. Note that a setting for making all of the book attributes ineffective may be provided. In this case, even if all of the book attributes have been made ineffective, the table of contents settings are of course applied to the table of contents as an exception. If the table of contents settings are stored separately from the book setting, such exception handling is unnecessary.

### (Place of insertion)

When the insertion of the table of contents page is designated, a table of contents chapter including the table of contents page is also created and included as a chapter unit in the document. In this case, insertion before or after the chapter to which the currently selected page belongs can be selected by an insertion place setting field 1406. This setting is stored as a table of contents insertion place 3008.

### (Text setting)

FIG. 16 is a diagram showing exemplary content of a table of contents page to be created by the table of contents insertion function. The user can set the format of the table of contents page by an initial symbol insertion setting field 1407, a page number setting field 1408, a lead line insertion setting field 1409, a table of contents text setting field 1410, and a table of contents insertion chapter setting field 1411.

A font selected in the table of contents text setting field 1410 is used for all of the information to be inserted into the table of contents page. The font type, size, color, decorations etc. can be set in the table of contents text setting field 1410. The text setting is stored as a text style setting 3009.

### (Initial symbol setting)

Whether to insert an initial symbol 1601 can be set in initial symbol insertion setting field 1407, as well as a symbol in a case of inserting an initial symbol. It is possible to designate the appending of, for example, a sequence starting with "1" to each item in the table of contents. Of course, it is also possible to set, for example, a sequence starting with "a" in the English alphabet or a sequence starting with the Greek number "i". The initial symbol setting is stored as an initial symbol setting 3004.

### (Page number setting)

Whether to use the page notation used in the header of the book attributes or use the page notation used in the footer can be set as a page number 1602 in the page number setting field 1408. The page number setting is stored as a page number setting 3005.

### (Lead line setting)

Whether to insert a lead line 1603 that connects a chapter title to a page number can be set in the lead line insertion setting field 1409. When the insertion of a lead line is selected, the lead line 1603 shown in FIG. 16 is added. The lead line setting is stored as a lead line setting 3006.

### (Table of contents insertion chapter setting)

Chapters to be enumerated as the table of contents can be set in the table of contents insertion chapter setting field 1411. Only chapters selected in this setting are reflected in the table of contents page. In the present embodiment, the selectable options are "front cover sheet", "forward", "body", "afterword", and "supplementary material". Of course, another option such as "all chapters" can also be provided. Note that in this case, although "body" is a constituent element along with "front cover sheet", "forward", "afterword", and "supplementary material", there are also cases in which a portion of the document data excluding the table of contents that has been inserted therein is called the "body". The table of contents insertion chapter setting is stored in items 3007a to 3007e in correspondence with the checked chapters, in a table of contents insertion chapter setting 3007.

The items as described above can be set as the table of contents setting information. Then, by selecting an OK button 1412, a table of contents page that reflects the table of contents setting information is created and inserted into the document data.

### <Exemplary table of contents page>

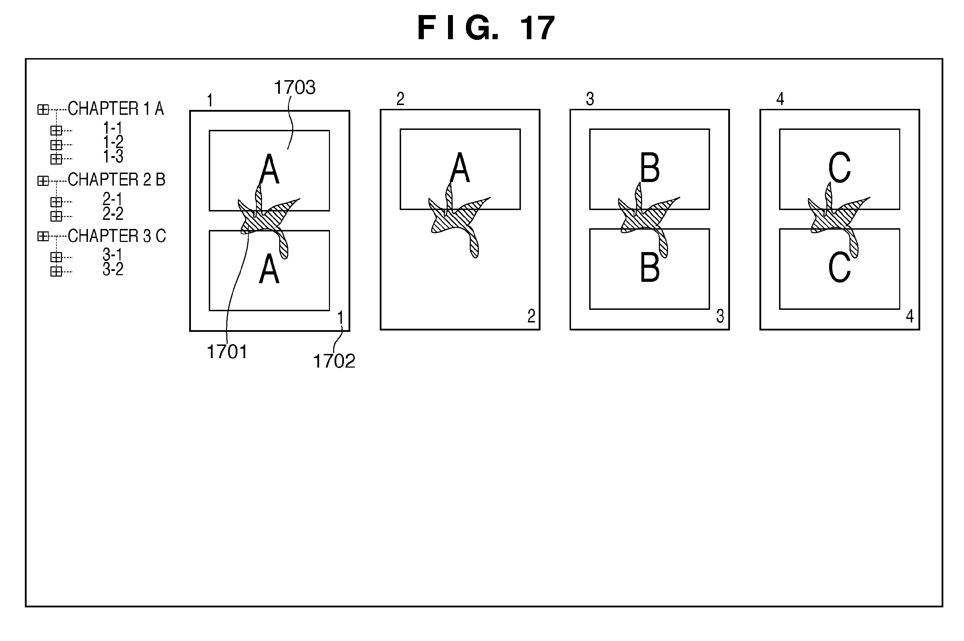

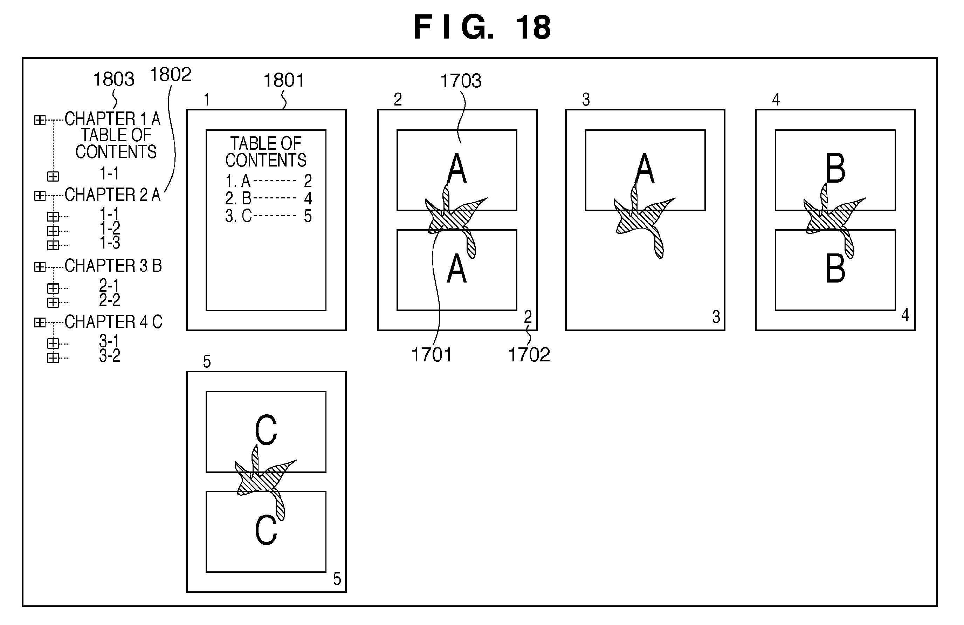

The following describes a condition of an output page in a case where a table of contents has been inserted in accordance with certain settings, with reference to FIGS. 17 to 19. In the document data shown in FIG. 17, a watermark 1701 and a footer 1702 have been appended according to the book attributes. A document page 1703 is currently selected. Also, for the appearance of the document data in FIG. 17, "finishing size" was selected as the table of contents page document size setting, "ineffective" was selected as the ineffective setting for the book attributes as a whole, "insert" was selected for the initial symbol setting and lead line setting, and "footer" was selected as the page number setting. "Before selected chapter" was selected as the table of contents insertion setting. In a case where a table of contents has been inserted in this condition, the document data appears as shown in FIG. 18. The table of contents page is created at a sheet size 1801 due to being created at the finishing page size. Since the book attributes have been made ineffective for the table of contents page, the watermark 1701, the footer 1702, and 2in1 have not been applied to the table of contents page. Also, a table of contents chapter 1803 has been inserted before a chapter 1802 that includes the selected page 1703.

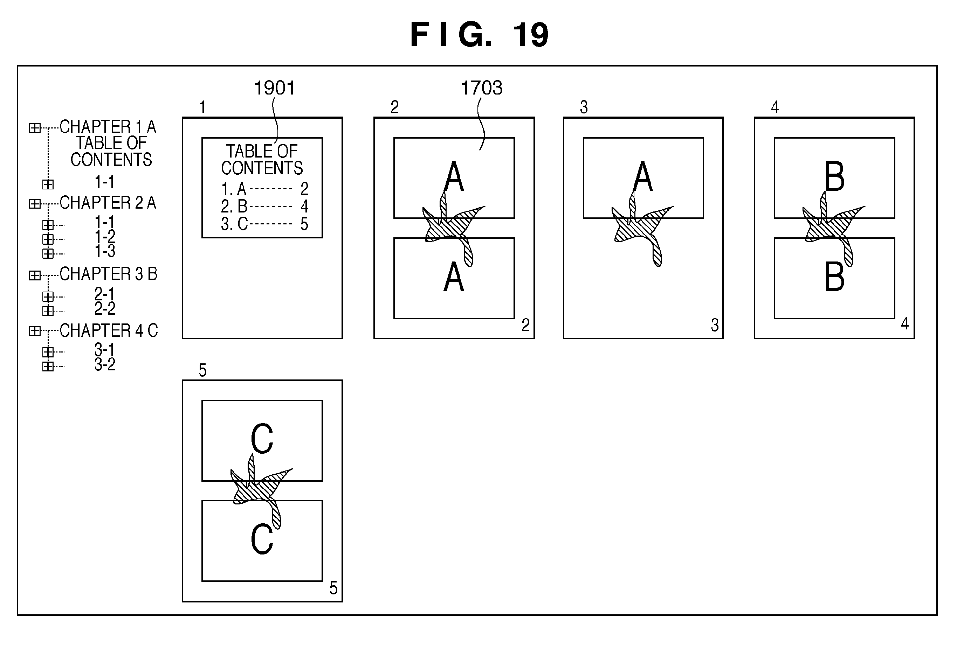

On the other hand, if "Document size of selected page" was selected as the table of contents page document size setting (other settings are the same as in FIG. 18), the document data appears as shown in FIG. 19. A table of contents page 1901 is created at the same size as the document size of the selected page 1703.

Note that in the chapter attributes and page attributes of the created table of contents page, table of contents flags 5001 and 6001 (see FIGS. 5 and 6 respectively) for indicating that that chapter and page are the table of contents are effective. In a case of updating the table of contents, the chapter that is to be updated is determined in accordance with the table of contents flags. Although it is possible to change the chapter position of the table of contents chapter, performing editing operations such as page deletion and moving on the table of contents page of the table of contents chapter is prohibited.

### <Table of contents insertion processing>

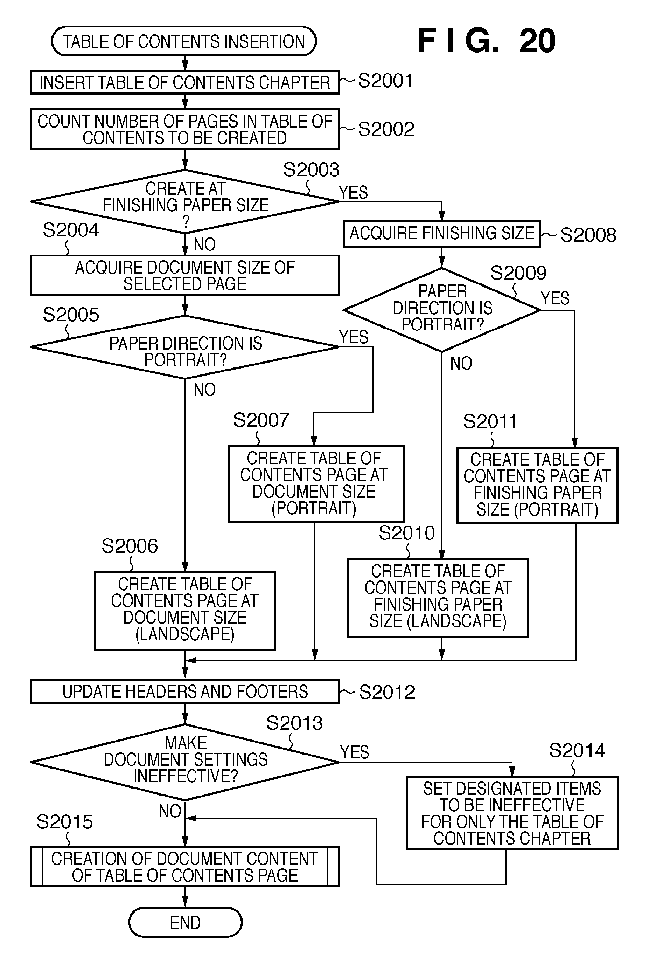

FIG. 20 is a flowchart showing exemplary processing performed in table of contents insertion. This processing is executed by the binding application 104 when the user has performed table of contents setting on the table of contents insertion screen and pressed the button 1412.

First, in step S2001, a table of contents chapter is inserted into the document data. The insertion position is a position corresponding to a value (table of contents insertion place setting 3008) set in the table of contents insertion place setting field 1406. A chapter node for the table of contents chapter is inserted at the designated position, and the chapter flag of the inserted chapter attributes is set. Next, in step S2002 the number of table of contents pages to be created is counted. This processing is performed in order to determine the number of pages to be inserted. The counting method involves first subtracting the top and bottom margins and table of contents title (the characters "table of contents") from the portrait direction size of the table of contents page document size, and setting the difference as the table of contents page effective portrait size. Then, a value (line pitch) obtained by adding the font size and space between lines is multiplied by the number of chapters to be inserted that is set in the table of contents insertion chapter setting field 1411 (table of contents insertion chapter setting 3007), and the product is set as the table of contents content amount. Thereafter, the table of contents content amount is divided by the table of contents page effective portrait size, and the quotient rounded up to the nearest integer is the number of pages in the table of contents. Note that if the body is constituted from a plurality of chapters, the number of chapters to be registered in the table of contents cannot be specified only from the table of contents insertion chapter setting 3008. In view of this, if the body is selected, the number of chapter nodes in the body of the book (i.e., document data) is counted, and the number of chapter nodes is set as the number of body chapters inserted in the table of contents. A chapter node is determined to be a body chapter node if the chapter node is for a chapter in which a heading other than, for example, "forward", "afterword", and "supplementary material" is described on the first page. Note that if all of the chapters are selected as chapters to be inserted in the table of contents, it is sufficient to count the number of chapter nodes included in the document data, and set the value as the number of chapters.

Next, in step S2003 the binding application 104 acquires the value (document size setting 3001) set in the table of contents page document size setting field 1402. Processing proceeds to step S2004 if the acquired setting value is "Selected document page", and to step S2008 if the acquired setting value is "Finishing size".

In step S2004, the document size is acquired from the information (page data) of the selected document page. Then the setting value (direction setting 3002) in the table of contents page document direction setting field 1403 is acquired, and in step S2005, a determination regarding the setting value is performed. Processing proceeds to step S2006 if the paper direction is landscape, and to step S2007 if the paper direction is portrait. In step S2006, the binding application 104 creates page data for the table of contents page in the landscape direction at the document size of the selected document page. On the other hand, in step S2007 the binding application 104 creates page data for the table of contents page in the portrait direction at the document size of the selected document page. Note that in both steps S2006 and S2007, the number of pages to be created is the number of pages counted in step S2002.

On the other hand, in step S2008, first the finishing size in the book attributes is acquired. Then the setting value of the direction setting 3002 is acquired, and in step S2009, a determination regarding the setting value is performed. Processing proceeds to step S2010 if the paper direction is landscape, and to step S2011 if the paper direction is portrait. In step S2010, the binding application 104 creates a table of contents page in the landscape direction at the finishing size. On the other hand, in step S2011, the binding application 104 creates a table of contents page in the portrait direction at the finishing size. Note that in both steps S2010 and S2011, the number of pages to be created is the number of pages checked in step S2002.

In the processing up to this point, the page data of the table of contents page and the table of contents chapter to be inserted are created excluding the content of the table of contents, and the number of pages in the document data after insertion of the table of contents is fixed. Here, in order to update the page numbers, the binding application 104 updates the header/footer of the book (document data) in step S2012.

Next, in step S2013, the value in the setting disabling setting field 1404 (ineffective setting 3003) is referenced. If the setting disabling setting field 1404 is effective (i.e., causing ineffectiveness), the processing of step S2014 is performed. In step S2014, the binding application 104 sets chapter attributes regarding setting items that are set in the ineffective setting selection field 1501 and are to be made ineffective. This is because chapter attribute settings are set for setting items that are repetitions of setting items in the book attributes, thereby causing such setting items in the book attributes to become ineffective. For example, if the N-up print setting is set to be made ineffective, the N-up print setting is set to 1-up in the table of contents chapter attributes. At the same time, setting is performed so that headers/footers, and a watermark are not added. For other settings that exist in both the book attributes and the chapter attributes, such settings in the book attributes can also be made ineffective.

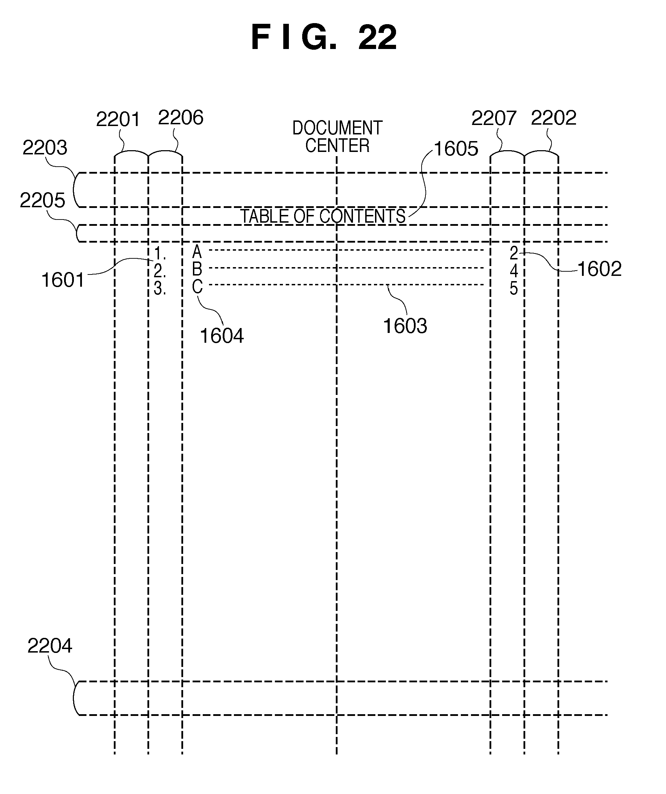

Then, in step S2015, the document content of the table of contents page is created, and the table of contents page insertion processing ends. Before giving a description of details of the processing of step S2015, the following describes the arrangement of the document content of the table of contents page with reference to FIG. 22.

FIG. 22 is a diagram showing an exemplary arrangement of the document content of the table of contents page. Text to be inserted in the table of contents page includes a table of contents title 1605, an initial symbol 1601, a chapter name 1604, a lead line 1603, and a page number 1602. In the document page of the table of contents page, areas in the top, bottom, left, and right portions of the document page are reserved as margins (margins 2201 to 2204 in FIG. 22). Although the size of the margins is arbitrary, it is preferable for the margins to be approximately 10% of the short side of the document size.

The table of contents title 1605 is inserted at a position in the portrait direction that is separated from the top edge of the document by the margin 2203, and centered in the landscape direction.

The initial symbol 1601 is inserted at a position in the portrait direction that is separated from the top edge of the document by the margin 2203 + the height of the table of contents title text + a margin 2205 below the table of contents title, and a position in the landscape direction that is separated from the left edge of the document by the left margin 2201. The chapter name 1604 is aligned to a position at the right edge of the initial symbol 1601 that has the longest landscape width. The lead line 1603 is inserted so as to span from the right edge of the chapter name 1604 of each chapter to the left edge of the page numbers 1602. The page numbers 1602 are inserted so that the right edge of the page numbers are at a position separated from the right edge of the document by the margin 2202. In accordance with the order of insertion, for each chapter, the initial symbol 1601, chapter name 1604, lead line 1603, and page number 1602 is inserted at a position in the portrait direction that is shifted in a downward direction by an amount equal to the text height.

### <Table of contents content creation processing>

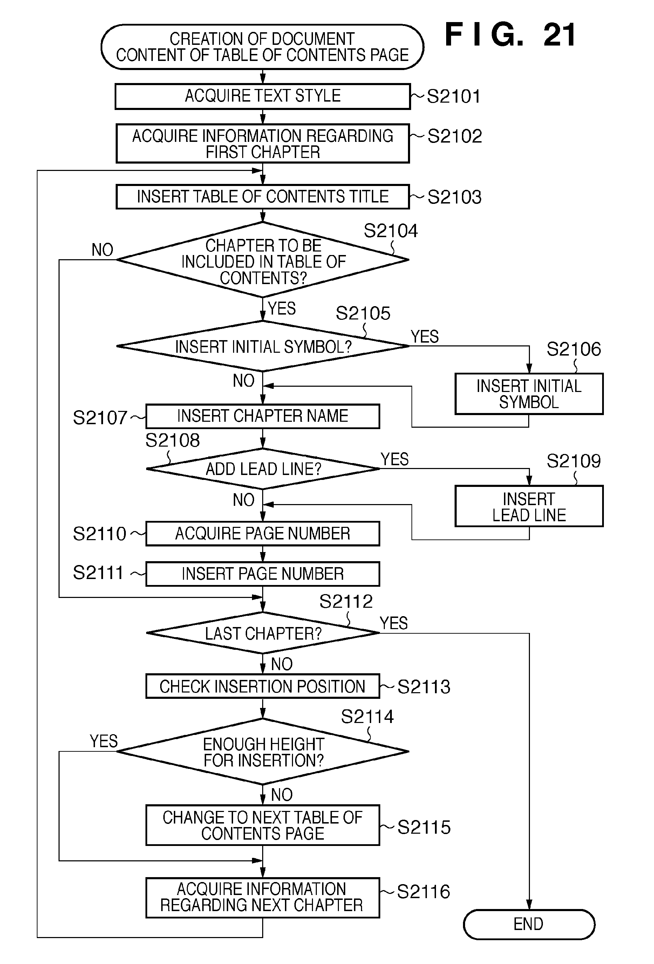

The following describes details of processing for creating the document content of the table of contents page (also called table of contents data) in step S2015, with reference to FIG. 21. FIG. 21 is a flowchart showing exemplary processing for creating the document content of a table of contents page. Also, the page on which the table of contents data is arranged is called the table of contents page.

First, in step S2101 the binding application 104 acquires the text information set in the table of contents text setting field 1410. The text designated by the text information is used as all of the document content of the table of contents page.

Next, in step S2102 the binding application 104 acquires (or extracts) information regarding the first chapter. The chapter information includes, for example, a chapter number, a chapter name and chapter attributes. Although chapter information is extracted here, other information can also be designated. For example, not just chapter information, if a condition such as "character string and noun" is designated, and a correspondence table including a page number and a portion that correspond to the condition is created, an index can be created in place of a table of contents. Of course, not just a character string, if another condition such as "image" or "graphic" is designated, an image index or graphic index can be created. In the present embodiment, the fixedly designated conditions are chapter information such as the chapter number, chapter name and chapter attributes, and such designated portions are extracted from the document data.

Next, in step S2103 the binding application 104 inserts a table of contents title. The table of contents title denotes the character string 1605 shown in FIG. 16. As one example, the text "Table of Contents" is inserted in the center of the top portion of the table of contents page.

After the chapter information has been acquired, in step S2104 the binding application 104 determines whether the chapter is set to be inserted according to the table of contents insertion chapter setting 3007. If the chapter is set to not be inserted, a series of chapter information insertion processing is skipped, and the processing of step S2112 is performed. Note that the table of contents chapter is set as a chapter that is to not be inserted in the table of contents.

Next, in step S2105 the binding application 104 determines whether the insertion of an initial symbol is set in the initial symbol setting 3004. In a case of inserting an initial symbol, the binding application 104 inserts the initial symbol in step S2106. The initial symbols are numbers that start at "1" and rise by one in order of the chapters to be inserted in the table of contents. The insertion location is as previously described. Next, in step S2107 the binding application 104 inserts the chapter name. Next, in step S2108 the binding application 104 determines whether the insertion of a lead line is set in the lead line setting 3006. In a case of inserting the lead line, the binding application 104 inserts the lead line in step S2109. Next, in step S2110 the binding application 104 acquires the page number of the page from which the chapter title was extracted. The page number is acquired in conformity with the style of the page number set in the header or footer, in accordance with the setting value of the page number setting 3005. Then, in step S2111 the acquired page number is inserted.

Thereafter, in step S2112, whether the chapter whose information was inserted into the table of contents page is the last chapter of the entire book is determined. If the chapter is the last chapter, processing ends. If the chapter is not last chapter, the processing of step S2113 is performed.

In step S2113, the binding application 104 determines the position at which the next chapter information is to be inserted. The position of insertion is a position that is below the position of the immediately previously inserted chapter by an amount equal to the text height. Then, in step S2114 a determination is made as to whether the position determined in step S2113 is above the bottom margin 2204 of the table of contents page + the text height. If the determined position is above the bottom margin 2204 of the table of contents page + the text height, there is room for insertion, and the processing of step 2116 is performed. If the determined position is below the bottom margin 2204 of the table of contents page + the text height, the margin will not be able to be ensured if the next chapter information is added. In this case, in order to add the information on the next page, in step S2115 the binding application 104 changes the page to which the chapter information is to be added to a next table of contents page, and performs the processing of step 2116.

In step 2116, the next chapter information is acquired, and thereafter the above-described processing of step S2104 to S2115 is repeated through the last chapter.

Through the above-described procedure, a table of contents page is created in accordance with the table of contents setting information designated in the UI shown in FIG. 14.

### <Table of contents update function>

In the created table of contents page, if the page numbers change due to the addition or deletion of pages or the like by a later user operation, the content of the table of contents can be updated by using a table of contents page update function. The table of contents page update function can be performed by selecting an "Update table of contents" menu in the UI of the binding application 104.

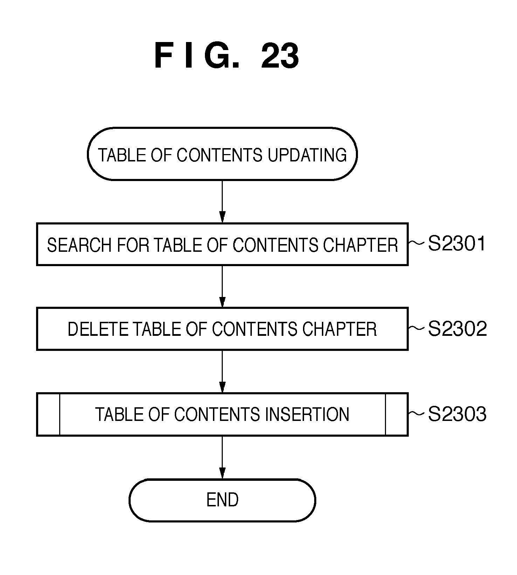

FIG. 23 is a flowchart showing an example of table of contents page update processing. First, in step S2301 a search for the table of contents chapter is performed. The table of contents chapter is the chapter whose table of contents setting in the chapter attributes is ON. For this reason, a search for the chapter in the book whose table of contents setting is ON is performed. Then, in step S2302, the table of contents chapter found in step S2301 is deleted. Thereafter, in step S2303 the table of contents page is updated by performing the table of contents insertion processing shown in FIG. 20.

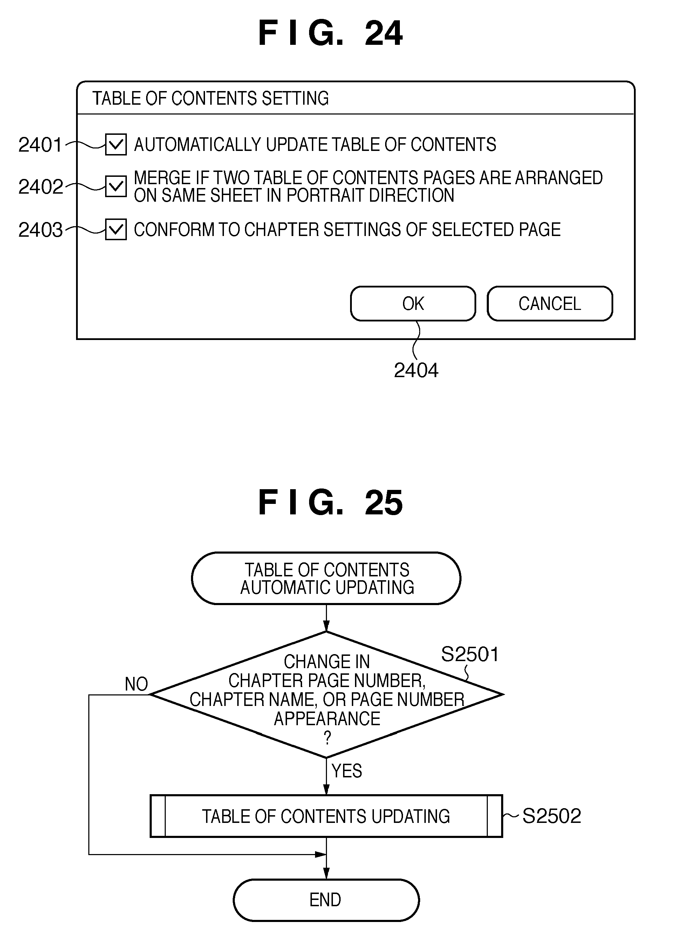

Also, table of contents updating can be automatically performed by selecting a "Table of contents update setting" menu in the binding application 104. FIG. 24 is a diagram showing an exemplary UI of a table of contents automatic update setting displayed when the "Table of contents update setting" menu has been selected. Making a table of contents automatic update setting field 2401 effective causes automatic updating of the table of contents to be performed.

FIG. 25 is a flowchart showing exemplary processing for performing automatic updating of the table of contents page. This processing is executed each time an operation having the possibility of causing a change in the content of the table of contents has been performed. Examples of such an operation include moving a page, deleting a page, moving a chapter, deleting a chapter, adding a chapter, changing a chapter name, importing a data file, and changing a book attribute. When any of these operations are performed, first in step S2501, a determination is made as to whether the page number, chapter title or page number appearance of each chapter has changed due to the operation. The determination method is a method in which all chapter information is stored before the operation, and an examination is performed as to whether there are any post-operation chapters whose page number, chapter title or page number appearance does not match the pre-operation chapter information. If even one item does not match in the pre-operation and post-operation information, in step S2502 the table of contents update processing shown in FIG. 23 is performed.

### <Table of contents merge function>

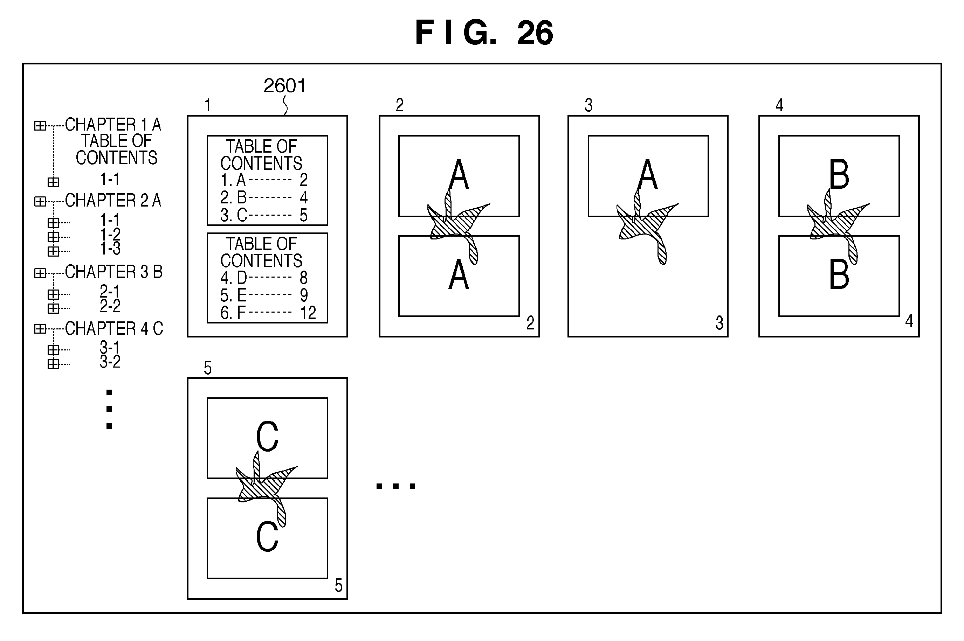

Consider a case in which the paper direction is portrait in the book attributes, the document page paper direction is landscape, a table of contents page has been created at the "Document page size of the selected page" and in the landscape direction, and 2-up has been set in the N-up setting in the book attributes. In this case, if the table of contents includes a plurality of pages, two pages in the table of contents are arranged on the same piece of paper (condition of paper 2601 in FIG. 26). In this condition, the visual appeal is degraded, and also there are two table of contents titles and a margin between the two document pages, as a result of which there is a decreased amount of information on the one piece of paper. Therefore the table of contents pages are merged under a specified condition.

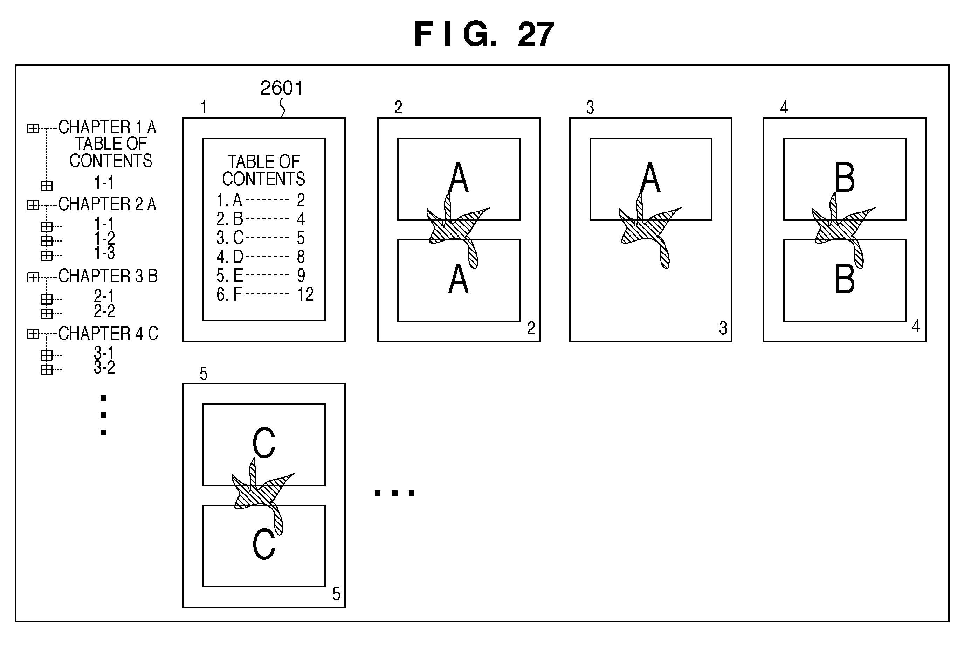

FIG. 27 is a diagram showing the condition of the book in FIG. 26 after a table of contents merge function has been performed. This function is also performed by the binding application 104, in combination with table of contents updating. The table of contents merge function causes the two table of contents pages arranged on the paper 2601 to be updated into one table of contents page. This function is performed by making a table of contents merge setting field 2402 in FIG. 24 effective.

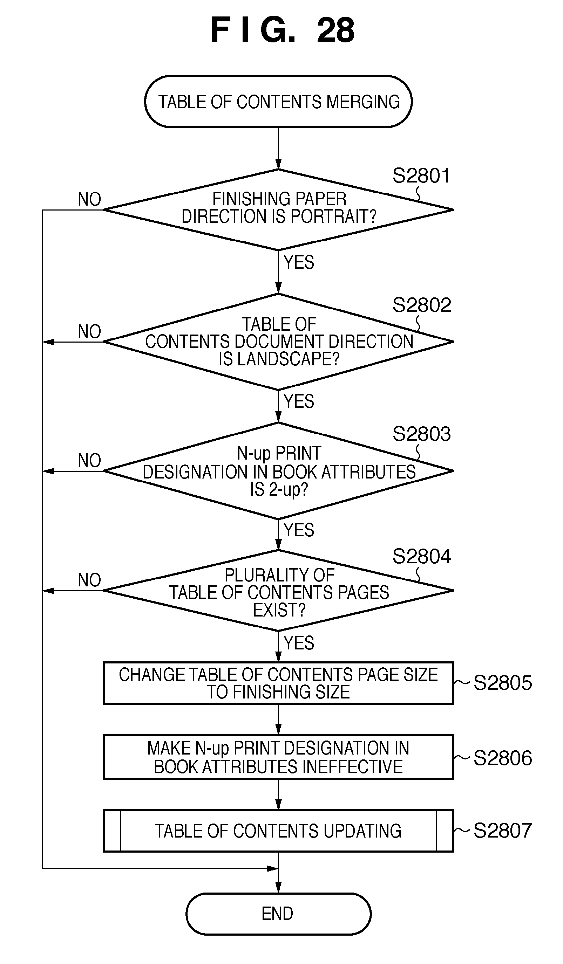

FIG. 28 is a flowchart showing exemplary processing of the table of contents merge function. This processing is performed when the table of contents merge setting field 2402 is made effective and a button 2404 has been pressed, or when table of contents insertion has been performed while the table of contents merge setting field 2402 is effective.

Next, in step S2801 the binding application 104 examines whether the finishing paper direction is portrait. If the finishing paper direction is portrait, in step S2802 the binding application 104 examines whether the table of contents document direction is landscape. If the table of contents document direction is landscape, in step S2803 the binding application 104 examines whether the N-up print setting in the book attributes is 2-up. If the N-up print setting is 2-up, in step S2804 the binding application 104 examines whether a plurality of table of contents pages exist. If a plurality of table of contents pages exist, the condition for merging table of contents pages is satisfied. Then, in step S2805 the binding application 104 changes the table of contents page document size setting to the finishing size. Next, in step S2806 the binding application 104 sets the book setting disabling to ON, and makes only the N-up print setting 3003a ineffective. Then, in step S2807, table of contents page update processing (regeneration processing) is performed.

This processing enables generating a table of contents page that is visually appealing.

### <Table of contents attribute interlink function>

In the case of a desire to create a table of contents page in conformity with the appearance of a specified document page, it is necessary to create the table of contents page at the same document size as the specified document page, and furthermore cause the chapter attributes and page attributes to be the same as the specified document page. In this case, making an attribute interlink setting field 2403 shown in FIG. 24 active enables causing conformity with the attributes of the specified document page.

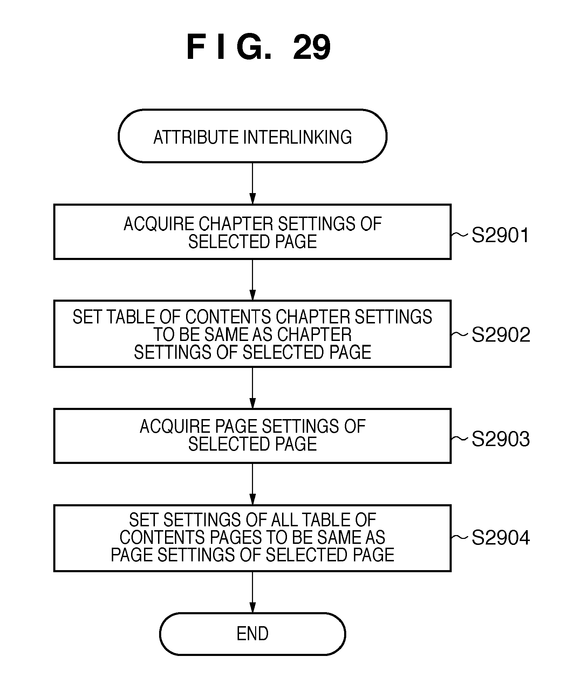

FIG. 29 is a diagram showing an exemplary flowchart of processing for causing the chapter attributes and page attributes of the table of contents chapter to conform to a selected document page. This processing is performed after table of contents insertion processing has been performed in a case where the attribute interlink setting field 2403 is effective and the table of contents page has been created at the selected document size. First, in step S2901, the chapter attributes of the selected document page are acquired. Then, in step S2902, the chapter attributes of the table of contents chapter are set to be the same as the chapter attributes acquired in step S2901. Next, in step S2903, the page attributes of the selected document page are acquired. Then, in step S2904, the page attributes of all of the table of contents page are set to be the same as the page attributes acquired in step S2903.

Note that the setting values shown in FIG. 24 are stored as the items 3010 to 3012 in the table of contents setting information 3000 shown in FIG. 30, and are referenced in the table of contents update processing. Note that the items 3010 to 3012 may be stored as setting information that is separate from the table of contents setting information 3000. Instead of being stored as part of the book attributes, the items 3010 to 3012 may be stored as processing settings of the binding application 104. The same follows for the entirety of the table of contents setting information 3000.

The above-described document processing system according to the present embodiment enables creating a table of contents page having a desired appearance and inserting the table of contents page at a desired position. Automatically updating the table of contents in accordance with editing of the document is also possible.

Note that the present invention may be applied to a system constituted from a plurality of devices (e.g., a host computer, an interface device, a reader, and a printer), and may be applied to an apparatus (e.g., a copier or a faxing apparatus) composed of a single device. Also, a system or apparatus may be supplied with a recording medium having recorded thereon program code that realizes the functionality of the above-described embodiment, and a computer in the system or apparatus may read out and execute the program code stored on the recording medium; the aim of the present invention is achieved in this case as well. In this case, the program code itself read out from the recording medium realizes the functionality of the above-described embodiment, and the program code itself and the recording medium that stores the program code constitute the present invention.

Examples of a recording medium for supplying the program code include a flexible disk, a hard disk, an optical disk, a magneto-optical disk, a CD-ROM, a CD-R, magnetic tape, a non-volatile memory card, and a ROM.

Also, an operating system (OS) or the like that is running on the computer may perform part or all of the actual processing based on instructions in the program code, and the functionality of the above-described embodiment may be realized by the processing; the present invention encompasses such a case as well. Furthermore, the present invention is also applicable to a case in which the program code read out from the storage medium is written to a memory provided in a function expansion board inserted in the computer or a function expansion unit connected to the computer. In this case, a CPU or the like provided in the function expansion board or the function expansion unit performs part or all of the actual processing based on instructions in the program code, and the functionality of the above-described embodiment is realized by the processing.

While the present invention has been described with reference to an exemplary embodiment, it is to be understood that the invention is not limited to the disclosed exemplary embodiment. The scope of the following claims is to be accorded the broadest interpretation so as to encompass all such modifications and equivalent structures and functions.
Examples of settings that can be set and are referenced in a case of automatically generating a table of contents page include a table of contents document size, document direction, ineffectiveness of settings for the overall document, selection of initial symbols, page numbers to be employed, presence/absence of lead lines, and selection of chapters to be displayed in the table of contents. Such setting values are referenced in a case of creating a table of contents page, and the table of contents page is generated in according with the setting values.

## Claims

1. A document processing apparatus that generates a table of contents page based on a document page constituting document data, **characterized by** comprising:
setting means (1404-1406; 2401-2404) for setting setting information regarding the table of contents page;
creation means (S2101-S2116) for extracting, from the document data, a portion of the document page that is relevant to the setting information set by the setting means, and creating table of contents data that enumerates the extracted portion and a page number at which the extracted portion is arranged; and
insertion means (S2002;S2006-S2007;S2010-S2011) for inserting, into the document data, the table of contents page that is based on the table of contents data created by the creation means and the setting information set by the setting means.

2. The document processing apparatus according to claim 1,
wherein the setting means sets a designated size to be applied to the table of contents page, and
the designated size is a size of a sheet on which the document page is arranged.

3. The document processing apparatus according to claim 2, further comprising size setting means (1402) for receiving a setting for causing the designated size to be the size of the sheet or a size of a selected document page, and storing the setting as a table of contents setting information piece,
wherein in accordance with the designated size stored as the table of contents setting information piece, if the size of the sheet has been set, the insertion means inserts a table of contents page that has been generated by arranging the table of contents data on a page whose size is the size of the sheet, and if the size of the selected document page has been set, the insertion means inserts a table of contents page that has been generated by arranging the table of contents data on a page whose size is the size of the selected document page.

4. The document processing apparatus according to claim 3,
wherein in a case where the size of the selected document page has been set as the designated size, and furthermore a document page has not been selected, the size setting means sets the size of the table of contents page to a size of a first document page in the document data.

5. The document processing apparatus according to claim 3,
wherein in a case where the size of the selected document page has been designated as the designated size, and furthermore a plurality of document pages have been selected, the size setting means sets the size of the table of contents page to a size of a first document page among the selected document pages.

6. The document processing apparatus according to any one of claims 1 to 5,
wherein the document data includes document setting information indicating a setting to be applied to an entirety of a document,
the document processing apparatus further comprises a setting disabling means (1404) for receiving an input of an ineffective item that is a setting item not to be reflected in the table of contents page in the document setting information, and storing the input as ineffective setting information, and
the insertion means inserts a table of contents page that has been generated by reflecting a setting in the document setting information excluding the ineffective item.

7. The document processing apparatus according to claim 6,
wherein the setting disabling means receives, as the input of the ineffective item, an item that is at least any of N-up printing for arranging a plurality of document pages on one side of a sheet, header and footer printing, and watermark printing, and stores the input as a table of contents setting information piece.

8. The document processing apparatus according to any one of claims 1 to 7, further comprising a direction setting means (1403) for receiving an input for setting a table of contents page direction to portrait or landscape, and storing the input as a table of contents setting information piece,
wherein in accordance with the table of contents page direction stored as the table of contents setting information piece, if a portrait direction has been selected, the insertion means inserts a table of contents page that has been created in the portrait direction, and if a landscape direction has been selected, the insertion means inserts a table of contents page that has been created in the landscape direction.

9. The document processing apparatus according to claim 8,
wherein in the document setting information, if 2-up for arranging two document pages on one side has been set as a document page arrangement, portrait has been set as a finishing sheet direction, and furthermore landscape has been set as the table of contents page direction, the insertion means inserts a table of contents page that has been regenerated after making the 2-up setting disabling and setting the table of contents page size to the size of the sheet.

10. The document processing apparatus according to claim 3,
wherein if the designated size of the table of contents page has been set to be the size of the selected document page, a page setting of the selected document page and a chapter setting of a chapter to which the selected document page belongs are respectively set as a page setting of the table of contents page and a chapter setting of a chapter to which the table of contents page belongs.

11. A document processing method in a document processing apparatus that generates a table of contents page based on a document page constituting document data, comprising:
a setting step in which a setting means of the document processing apparatus sets setting information regarding the table of contents page;
a creation step in which a creation means of the document processing apparatus extracts, from the document data, a portion of the document page that is relevant to the setting information set in the setting step, and creates table of contents data that enumerates the extracted portion and a page number at which the extracted portion is arranged; and
an insertion step in which an insertion means of the document processing apparatus inserts, into the document data, the table of contents page that is based on the table of contents data created in the creation step and the setting information set in the setting step.

12. A medium having stored thereon a program for causing a computer to execute a method for causing the computer to function as a document processing apparatus having an imposition function for arranging document pages constituting document data on sheets in accordance with one document page per sheet or a plurality of document pages per sheet, the method comprising the steps of:
creating a table of contents page by extracting, from document data, a portion that is relevant to a designated condition, creating table of contents data that enumerates the extracted portion and a page number at which the portion exists, and arranging the table of contents data on a page having a designated size; and
inserting the table of contents page into the document data.
